# EUROPEAN PATENT APPLICATION

(11) **EP 4 752 722 A1**
(43) Date of publication of application: **03.06.2026**
(21) Application number: 24864174.8
(22) Date of filing: 21.06.2024
(51) Int. Cl.: G06F 9/50

(54) **MEMORY MANAGEMENT METHOD AND APPARATUS, AND ELECTRONIC DEVICE AND STORAGE MEDIUM**

(30) Priority: 14.09.2023 CN 202311191949
(71) Applicant: HUAWEI TECHNOLOGIES CO., LTD., Shenzhen 518129 (CN)
(72) Inventor: WANG, Xu, Shenzhen, Guangdong 518129 (CN); HU, Wanming, Shenzhen, Guangdong 518129 (CN); LIN, Zichang, Shenzhen, Guangdong 518129 (CN); DONG, Wenjie, Shenzhen, Guangdong 518129 (CN); MA, Xiaofei, Shenzhen, Guangdong 518129 (CN); CHENG, Liang, Shenzhen, Guangdong 518129 (CN)
(74) Representative: Goddar, Heinz J.
(86) International application number: PCT/CN2024/100606
(87) International publication number: WO 2025/055449

(57) **Abstract**

This application provides a memory management method and apparatus, an electronic device, and a storage medium, and relates to the field of memory management technologies. Through compiler instrumentation of multi-modular redundancy memory management, the method improves memory management reliability, can reduce changes to source code, and maintains compatibility with an existing memory management mechanism. The method may include the following procedure: identifying that a directive exists in a compilation object; and performing compiler instrumentation on the compilation object to obtain target code. The directive is used to modify a memory variable, to represent that the modified memory variable is a target variable for which multi-modular redundancy memory needs to be applied for. When being run, executable code corresponding to the target code is at least used to apply for N pieces of memory corresponding to the target variable. N ≥ 2. N is an integer.

## Description

This application claims priority to Chinese Patent Application No. 202311191949.X, filed with the China National Intellectual Property Administration on September 14, 2023 and entitled "MEMORY MANAGEMENT METHOD AND APPARATUS, ELECTRONIC DEVICE, AND STORAGE MEDIUM", which is incorporated herein by reference in its entirety.

### TECHNICAL FIELD

This application relates to the field of memory management technologies, and in particular, to a memory management method and apparatus, an electronic device, and a storage medium.

### BACKGROUND

In harsh service scenarios such as industrial control and aerospace, various types of faults may occur due to adverse factors such as electromagnetic radiation and cosmic rays. Logic of memory faults is complex, and there is no mature fault tolerance solution at present.

A memory fault handling solution is to improve reliability by upgrading hardware, such as replacing a conventional storage with an aerospace-grade multi-modular dynamic random access memory (Dynamic Random Access Memory, DRAM). High-reliability hardware such as an aerospace-grade DRAM can significantly reduce a fault rate, but most has high costs. Statistically, costs of an aerospace-grade dedicated chip are approximately 1000 times higher than those of a commercial off-the-shelf (Commercial off-the-shelf, COTS) component. High costs limit actual application of the memory fault handling solution. Therefore, a fault tolerance solution with lower costs is required to improve memory management reliability.

### SUMMARY

This application provides a memory management method and apparatus, an electronic device, and a storage medium. In a compilation process, multi-modular redundancy memory management is performed through compiler instrumentation for a variable modified by a directive. This can reduce costs and a fault rate and improve memory management reliability.

According to a first aspect, an embodiment of this application provides a memory management method. The method includes: identifying that a directive exists in a compilation object; and performing compiler instrumentation on the compilation object to obtain target code. The directive is used to modify a memory variable, to represent that the modified memory variable is a target variable for which multi-modular redundancy memory needs to be applied for. When being run, executable code corresponding to the target code is at least used to apply for N pieces of memory corresponding to the target variable. N ≥ 2. N is an integer. Compared with high-reliability hardware such as aerospace-grade hardware, the method can significantly reduce costs. It can also be compatible with an existing memory manager standard, eliminating a need for intrusive shotgun changes to source code. Therefore, the method is a feasible memory management fault-tolerance solution.

In a feasible implementation, performing compiler instrumentation on the compilation object includes: changing a memory application interface that uses the target variable as an object in the compilation object into calling a first API. The first API is a multi-modular redundancy memory application function. The multi-modular redundancy memory application function is at least used to apply for the N pieces of memory corresponding to the target variable. The first API is a function used to implement multi-modular redundancy memory management (memory application), and may be independently called in a compilation process, so that an existing memory application interface does not need to be changed in the source code, and only a modification directive needs to be added when the variable is defined. This reduces changes to the source code and helps implement one track of the source code. In addition, this manner of calling a corresponding function through compiler instrumentation can achieve compatibility with an existing general memory management mechanism. For example, memory management functions such as an malloc function and a free function can still be used in the source code. When executable code (binary code) obtained through compiler instrumentation is run, multi-modular redundancy memory management can be implemented, to resolve a problem that multi-modular redundancy management is incompatible with conventional memory management (namely, non-multi-modular redundancy memory management).

In a feasible implementation, performing compiler instrumentation on the compilation object includes: changing a read operation that uses the target variable as an object in the compilation object into calling a second API. The second API is a multi-modular redundancy memory read function. The multi-modular redundancy memory read function is at least used to read values stored in the N pieces of memory. Similar to the first API, the second API is a function used to perform a read operation in multi-modular redundancy memory management, and may be independently called in the compilation process, so that an existing memory read interface does not need to be changed in the source code. This reduces changes to the source code, helps implement one track of the source code, and can achieve compatibility with the existing general memory management mechanism.

In a feasible implementation, performing compiler instrumentation on the compilation object includes: changing a write operation that uses the target variable as an object in the compilation object into calling a third API. The third API is a multi-modular redundancy memory write function. The multi-modular redundancy memory write function is at least used to write a value of the target variable into the N pieces of memory. Similar to the first API, the third API is a function used to perform a write operation in multi-modular redundancy memory management, and may be independently called in the compilation process, so that an existing memory write interface does not need to be changed in the source code. This reduces changes to the source code, helps implement one track of the source code, and can achieve compatibility with the existing general memory management mechanism.

In a feasible implementation, performing compiler instrumentation on the compilation object includes: changing a memory release interface that uses the target variable as an object in the compilation object into calling a fourth API. The fourth API is a multi-modular redundancy memory release function. The multi-modular redundancy memory release function is at least used to release the N pieces of memory. Similar to the first API, the fourth API is a function used to perform a release operation in multi-modular redundancy memory management, and may be independently called in the compilation process, so that an existing memory release interface does not need to be changed in the source code. This reduces changes to the source code, helps implement one track of the source code, and can achieve compatibility with the existing general memory management mechanism.

In a feasible implementation, when being run, the executable code corresponding to the target code is further used to apply for a multi-modular redundancy memory management structure. The multi-modular redundancy memory management structure is used to manage the N pieces of memory. The multi-modular redundancy memory release function is used to release the N pieces of memory and the multi-modular redundancy memory management structure.

In a feasible implementation, identifying that the directive exists in the compilation object includes: identifying that the directive exists in a code line corresponding to the target variable in the compilation object. A position to which the directive is added is flexible, and is not limited to adding the directive before the variable, to facilitate implementation.

In a feasible implementation, the N pieces of memory include one primary memory block and (N - 1) secondary memory blocks. The target code includes calling the first API. The first API is used to perform the following operations: applying for the multi-modular redundancy memory management structure, where the multi-modular redundancy management structure includes an object header (header), and the header is at least used to store base addresses of the (N - 1) secondary memory blocks; applying for the N pieces of memory corresponding to the target variable, and returning base addresses respectively corresponding to the N pieces of memory; defining a pointer used to access the target variable as a wide pointer; and returning the wide pointer. In the wide pointer, a most significant bit is used to store a first base address, and a least significant bit is used to store a first pointer. The first base address is a base address of the primary memory block. The first pointer points to a memory address that is in the primary memory block and that is used to store the value of the target variable. This manner provides a multi-modular memory addressing solution in a multi-modular redundancy memory management scenario.

In a feasible implementation, the target code includes calling the second API. The second API is used to perform the following operations:
determining, based on the first base address and the first pointer, a second base address and a second pointer to an N^{th} pointer that correspond to the (N - 1) secondary memory blocks, where the second base address is a base address of the header, and the second pointer to the N^{th} pointer respectively point to memory addresses that are in the (N - 1) secondary memory blocks and that are used to store the value of the target variable; and reading the values in the memory addresses to which the first pointer and the second pointer to the N^{th} pointer respectively point.

In a feasible implementation, determining, based on the first base address and the first pointer, the second base address and the second pointer to the N^{th} pointer that correspond to the (N - 1) secondary memory blocks includes: determining the second base address based on the first base address and a first offset, where the first offset is an offset of the second base address relative to the first base address, and the first offset is a constant; reading, based on the second base address, the base addresses corresponding to the (N - 1) secondary memory blocks; determining a second offset of the memory address to which the first pointer points relative to the first base address; and determining the second pointer to the N^{th} pointer based on the second offset and the base addresses corresponding to the (N - 1) secondary memory blocks.

In a feasible implementation, the header is further used to store N values returned from the first pointer to the N^{th} pointer. When being run, executable code corresponding to the second API is further used to perform the following operations: comparing the N values, determining a correct value, and returning the correct value as the value of the target variable; determining a faulty memory block; and writing the correct value into the faulty memory block. Multi-modular memory arbitration improves memory management reliability.

In a feasible implementation, the target code includes calling the first API. The first API is used to perform the following operation: applying for the N pieces of memory corresponding to the target variable. A base address of a t^{th} piece of memory has a constant offset relative to a base address of a (t - 1)^{th} piece of memory. 2 ≤ t ≤ N.

In a feasible implementation, the N pieces of memory include one primary memory block and (N - 1) secondary memory blocks. The target code includes calling the second API. When being run, executable code corresponding to the second API is used to perform the following operations: determining a second pointer to an N^{th} pointer based on a first pointer and a constant offset, where the first pointer points to a memory address that is in the primary memory block and that stores the value of the target variable; and reading, through the first pointer, values in the memory addresses to which the first pointer and the second pointer to the N^{th} pointer point, and returning the values.

In a feasible implementation, the target code includes calling the first API. When being run, executable code corresponding to the first API is used to perform the following operations: applying for a third multi-modular redundancy memory management structure, where the third multi-modular redundancy management structure includes a first virtual memory region and a second virtual memory region, the first virtual memory region is used to store the target variable, and the second virtual memory region is used to store a memory variable for which multi-modular redundancy memory does not need to be applied for; and applying for the N pieces of memory in address space occupied by the first virtual memory region. In the N pieces of memory, a base address of a t^{th} memory block has a constant offset relative to a base address of a (t - 1)^{th} memory block. 2 ≤ t ≤ N.

In a feasible implementation, after performing compiler instrumentation on code corresponding to the memory application interface to obtain first code, the method further includes: identifying a read operation and/or a write operation that use/uses the target variable as an object; and changing code corresponding to the read operation and/or the write operation into fifth target code through a compiler. When being run, executable code corresponding to the fifth target code is used to perform the following operations: starting a patrol thread; and triggering the patrol thread. The following operations are performed through the patrol thread: writing the value of the target variable into the N pieces of memory, or reading values in the N pieces of memory corresponding to the target variable; obtaining a correct value based on an arbitration strategy and returning the correct value as the value of the target variable; determining a memory block with a storage error; and writing the correct value into the memory block with the storage error. This implementation is applicable to an application scenario involving large-scale or high-concurrency read/write operations, and can handle frequent read/write operations, to reduce a possibility of system crash.

In a feasible implementation, when the target variable is a static (static) variable or a global variable, performing compiler instrumentation on the compilation object to obtain the target code includes: linking a definition that uses the target variable as an object in the compilation object to a multi-modular data segment of a binary program, to obtain the executable code. The executable code is used to apply for the N pieces of memory corresponding to the target variable when the executable code is loaded or an operating system is loaded.

According to a second aspect, an embodiment of this application further provides a memory management apparatus. The apparatus includes: a directive identification module, configured to identify that a directive exists in a compilation object, where the directive is used to modify a target variable, and the target variable is a memory variable for which multi-modular redundancy memory needs to be applied for; and a compiler instrumentation module, configured to perform compiler instrumentation on the compilation object to obtain target code, where when being run, executable code corresponding to the target code is at least used to apply for N pieces of memory corresponding to the target variable, N ≥ 2, and N is an integer.

In a feasible implementation, the compiler instrumentation module is specifically configured to change a memory application interface that uses the target variable as an object in the compilation object into calling a first API. The first API is a multi-modular redundancy memory application function. The multi-modular redundancy memory application function is at least used to apply for the N pieces of memory corresponding to the target variable.

In a feasible implementation, the compiler instrumentation module is specifically configured to change a read interface that uses the target variable as an object in the compilation object into calling a second API. The second API is a multi-modular redundancy memory read function. The multi-modular redundancy memory read function is at least used to read values stored in the N pieces of memory.

In a feasible implementation, the compiler instrumentation module is specifically configured to change a write interface that uses the target variable as an object in the compilation object into calling a third API. The third API is a multi-modular redundancy memory write function. The multi-modular redundancy memory write function is at least used to write a value of the target variable into the N pieces of memory.

In a feasible implementation, the compiler instrumentation module is specifically configured to change a memory release interface that uses the target variable as an object in the compilation object into calling a fourth API, where the fourth API is a multi-modular redundancy memory release function; and the multi-modular redundancy memory release function is at least used to release the N pieces of memory.

In a feasible implementation, the N pieces of memory include one primary memory block and (N - 1) secondary memory blocks. The target code includes calling the first API. The first API is used to perform the following operations: applying for the multi-modular redundancy memory management structure, where the multi-modular redundancy management structure includes an object header (header), and the header is at least used to store base addresses of the (N - 1) secondary memory blocks; applying for the N pieces of memory corresponding to the target variable, and returning base addresses respectively corresponding to the N pieces of memory; defining a pointer used to access the target variable as a wide pointer; and returning the wide pointer. In the wide pointer, a most significant bit is used to store a first base address, and a least significant bit is used to store a first pointer. The first base address is a base address of the primary memory block. The first pointer points to a memory address that is in the primary memory block and that is used to store the value of the target variable.

In a feasible implementation, the target code includes calling the second API. The second API is used to perform the following operations: determining, based on the first base address and the first pointer, a second base address and a second pointer to an Nth pointer that correspond to the (N - 1) secondary memory blocks, where the second base address is a base address of the header, and the second pointer to the Nth pointer respectively point to memory addresses that are in the (N - 1) secondary memory blocks and that are used to store the value of the target variable; and reading the values in the memory addresses to which the first pointer and the second pointer to the Nth pointer respectively point.

In a feasible implementation, the target code includes calling the first API. The first API is used to perform the following operation: applying for the N pieces of memory corresponding to the target variable. A base address of a t^{th} piece of memory has a constant offset relative to a base address of a (t - 1)^{th} piece of memory. 2 ≤ t ≤ N.

In a feasible implementation, performing compiler instrumentation on the compilation object includes: changing the read interface and/or the write interface that use/uses the target variable as an object in the compilation object into code used to perform the following operations: starting a patrol thread; and triggering the patrol thread. The patrol thread is used to: write the value of the target variable into the N pieces of memory, or read values in the N pieces of memory corresponding to the target variable; and compare the values in the N pieces of memory, obtain a correct value based on an arbitration strategy, and return the correct value as the value of the target variable.

In a feasible implementation, when the target variable is a static (static) variable or a global variable, performing compiler instrumentation on the compilation object to obtain the target code includes: linking a definition that uses the target variable as an object in the compilation object to a multi-modular data segment of a binary program, to obtain the executable code. The executable code is used to apply for the N pieces of memory corresponding to the target variable when the executable code is loaded or an operating system is loaded.

According to a third aspect, an embodiment of this application further provides a computer program product. The program product includes a program. The program includes a directive. The directive is used to modify a target variable. The target variable is a memory variable for which multi-modular redundancy memory needs to be applied for. Target code corresponding to the program is at least used to apply for N pieces of memory corresponding to the target variable. The target code includes code obtained by performing compiler instrumentation on the program. N ≥ 2. N is an integer.

According to a fourth aspect, an embodiment of this application further provides a computer program product. The program product includes a program. When the program is run by an electronic device, the electronic device is enabled to implement the method according to any one of the implementations of the first aspect.

According to a fifth aspect, an embodiment of this application further provides an electronic device, configured to send data through a data transmission interface. The electronic device includes one or more processors, a storage, at least one application, and one or more computer programs. The one or more computer programs are stored in the storage. The one or more computer programs include instructions. When the instructions are executed by the electronic device, the electronic device is enabled to perform the method according to any one of the implementations of the first aspect.

According to a sixth aspect, an embodiment of this application further provides a storage medium, including computer instructions. When the computer instructions are run on an electronic device, the electronic device is enabled to perform the method according to any one of the implementations of the first aspect.

According to a seventh aspect, an embodiment of this application further provides a chip system, including: a communication interface, configured to input and/or output data; and a processor, configured to execute a computer-executable program, to enable a device in which the chip system is installed to perform the method according to any one of the implementations of the first aspect.

### BRIEF DESCRIPTION OF DRAWINGS

FIG. 1 is an example diagram of a full-scenario fault mode;
FIG. 2 is a diagram of an application scenario of a memory management method according to an embodiment of this application;
FIG. 3 is a diagram of an architecture of a method in a related technology 2;
FIG. 4 is a diagram of an architecture of an embodiment of a memory management method according to this application;
FIG. 5 is a diagram of a system architecture corresponding to a related technology 2;
FIG. 6 is a diagram of a comparison of an embodiment of a memory management method according to this application with a related technology and the conventional technology;
FIG. 7 is a diagram of a system architecture of dynamic memory management in a memory management method according to this application;
FIG. 8 is a diagram of a compiler architecture in an embodiment of a memory management method according to this application;
FIG. 9 is a diagram of a system architecture of static memory management in a memory management method according to this application;
FIG. 10 is a diagram of a comparison between specifying a directive and specifying no directive in static memory management in an embodiment of a memory management method according to this application;
FIG. 11 is a diagram of compiler instrumentation in a specific embodiment of a memory management method according to this application;
FIG. 12 is a diagram of compiler instrumentation in another specific embodiment of a memory management method according to this application;
FIG. 13 is a diagram of compiler instrumentation in still another specific embodiment of a memory management method according to this application;
FIG. 14 is a diagram of starting a patrol thread in yet another specific embodiment of a memory management method according to this application; and
FIG. 15 is a diagram of a hardware structure of an electronic device.

### DESCRIPTION OF EMBODIMENTS

To make the objectives, technical solutions, and advantages of this application clearer, the following clearly and completely describes the technical solutions in this application with reference to specific embodiments and accompanying drawings in this application. It is clear that the described embodiments are merely some but not all of embodiments of this application. All other embodiments obtained by a person of ordinary skill in the art based on embodiments of this application without creative efforts shall fall within the protection scope of this application.

Terms used in implementations of this application are merely used to explain specific embodiments of this application, but are not intended to limit this application.

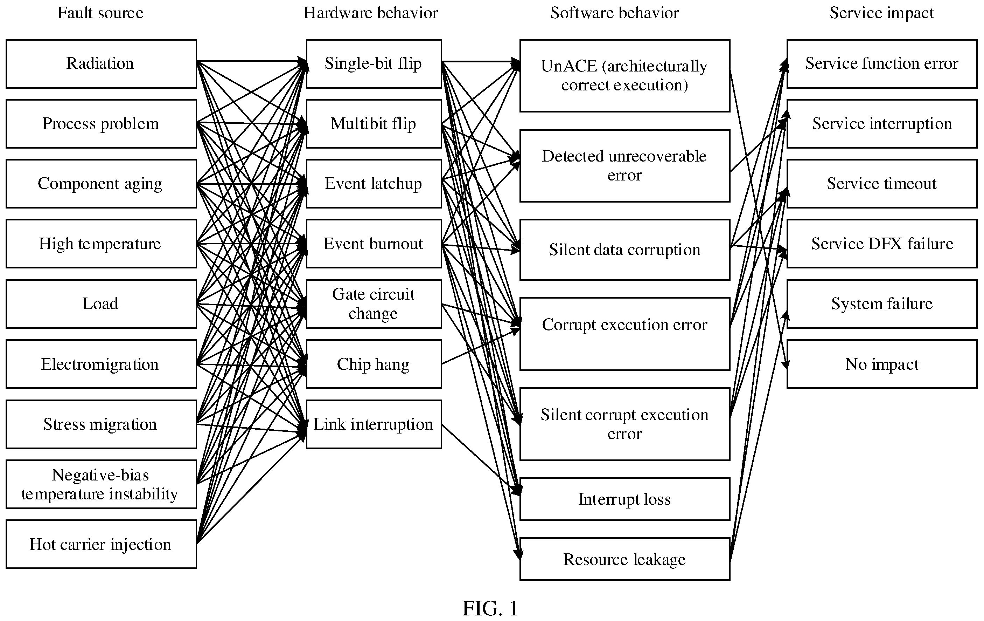

As shown in FIG. 1, in harsh service application scenarios such as industrial control and aerospace, hardware faults such as transition, latchup, burnout, hang, and link interruption may occur due to adverse factors such as electromagnetic radiation (for example, cosmic rays), a process problem, component aging, high and low temperatures, load, electromigration (electromigration), stress migration (stress migration), negative-bias temperature instability, hot carrier injection, and humidity. If the hardware faults are not handled in time, software faults such as unACE (Architecturally Correct Execution, architecturally correct execution), DUE (Detected Unrecoverable Error, detected unrecoverable error), SDC (Silent Data Corruption, silent data corruption), CEE (Corrupt Execution Errors, corrupt execution error), SCEE (Silent Corrupt Execution Error, silent corrupt execution error), interrupt loss, and resource leakage affect application service behavior, resulting in service layer faults, for example, a service function error, service interruption, service timeout, and service DFX failure.

From a macro perspective, common faults may be classified into memory faults, external storage faults, link faults, CPU faults, and the like. For CPU faults, hardware-based lock-step (lock-step) is usually used as a mainstream CPU fault tolerance technology. A CPU that supports a lock-step architecture is formed by two processors to monitor each other. Logic of external storage faults is simple due to a long lifecycle. Link faults rely on a hardware or protocol fault tolerance capability. Logic of memory faults is complex, and a fault tolerance solution is currently lacked.

Stack memory faults and heap memory faults are memory faults. Compared with stack memory with a short lifecycle and centralized code and data segments, heap memory has varying lifecycles and dispersed positions, and accounts for up to 95% of service memory, making it one of main factors that affect memory reliability. Therefore, one of core challenges for reliability in the industrial control and aerospace fields is to ensure reliability of heap memory.

The following describes two related technologies to help understand improvements made in the solution provided in embodiments of this application.

In a related technology 1, to cope with memory faults such as heap memory faults, hardware is upgraded and reconstructed, and high-reliability dedicated hardware such as an aerospace-grade multi-modular DRAM is configured to reduce a fault rate. For example, a high-reliability multi-modular redundancy DRAM Teledyne e2v launched in 2020 has four additional DRAM chips compared with a conventional DRAM, namely, five bare-die DRAM chips, to improve a system-level error detection capability. Multi-modular redundancy memory is implemented in terms of hardware, to improve reliability. However, this solution has the following disadvantages:

High costs of dedicated chips and other components: For example, in an aerospace scenario, records indicate that a fault rate of a COTS component is approximately 100000 times higher than that of an aerospace-grade component. In other words, the fault rate of the aerospace-grade dedicated component can be reduced to approximately one hundred thousandth of that of the COTS component. However, a cost of a dedicated high-reliability component such as the aerospace-grade component is approximately 1000 times higher than that of the COTS component.

Slow technological iterative evolution: Aerospace-grade components are in small quantities with high reliability requirements, leading to a conservative technology and process. Their iterative evolution is far slower than that of COTS components.

Small storage space: Redundancy storage space, an additional system-level error detection circuit, and a conservative process make storage space of aerospace-grade DRAMs several times less than that of COTS components.

In a related technology 2, a solution to memory faults is to improve reliability by implementing multi-modular redundancy memory management through software. In this solution, to implement multi-modular redundancy memory management, a multi-modular redundancy arbitration layer is added based on a conventional memory allocator. Multi-modular redundancy memory access is implemented by simultaneously performing read/write operations on a plurality of independent memory blocks through a newly added API.

In a research process, the inventors find that in this solution, a new memory management interface needs to be added to source code. For example, to implement multi-modular redundancy memory application, release, read, and write, a corresponding memory application interface, memory release interface, memory read interface, and memory write interface need to be newly added to the source code. These newly added interfaces are equivalent to adding a set of interfaces that are independent of an existing general memory manager, and are incompatible with currently commonly used memory managers, such as ptmalloc.

For example, in the ptmalloc memory manager, a malloc function and a free function may be used to respectively implement memory application and memory release. However, in this solution, the malloc function and the free function cannot be used to implement application and release for a multi-modular redundancy memory variable, and a pointer cannot be directly used to perform operations such as read and write like malloc.

Due to incompatibility, a same set of code cannot be compatible with both a non-reliability scenario and a high-reliability scenario. To implement multi-modular redundancy memory management, intrusive shotgun hardening changes need to be made to source code of a historical version. For large-scale software code, code quality and maintenance costs are unacceptable.

It can be learned that in the related technologies, high-reliability hardware has high costs; and a solution of newly adding a dedicated interface for multi-modular redundancy memory to software is incompatible with a manner (malloc, free, and pointer access) used in the non-reliability scenario, and shotgun changes need to be made.

In the industrial control and aerospace fields, there are requirements for wide application and execution efficiency of multi-modular redundancy memory management that is transparent to services. As a new infrastructure information network and a global seamless network that integrates the sky and earth, a satellite communication network has important impact on development of many fields such as future communication (for example, 6G) and needs to be highly reliable. Due to requirements for costs, computing power, and fast iteration, the satellite communication field is shifting to COTS components. In strong radiation environments, a COTS fault rate increases by nearly 10⁵ times. This shift brings reliability pain points, requiring implementation of multi-modular redundancy to be enhanced for aerospace software to ensure its error detection and fault tolerance capabilities.

With service and scale expansion in the satellite field, a code scale has grown from a conventional hundred-thousand range to tens of millions. How to avoid intrusive shotgun hardening on code becomes particularly important. Therefore, resolving problems of code quality, maintenance costs, and the like due to shotgun changes introduced by multi-modular redundancy becomes a key requirement.

In view of this, embodiments of this application provide a new memory management solution to address the foregoing challenge.

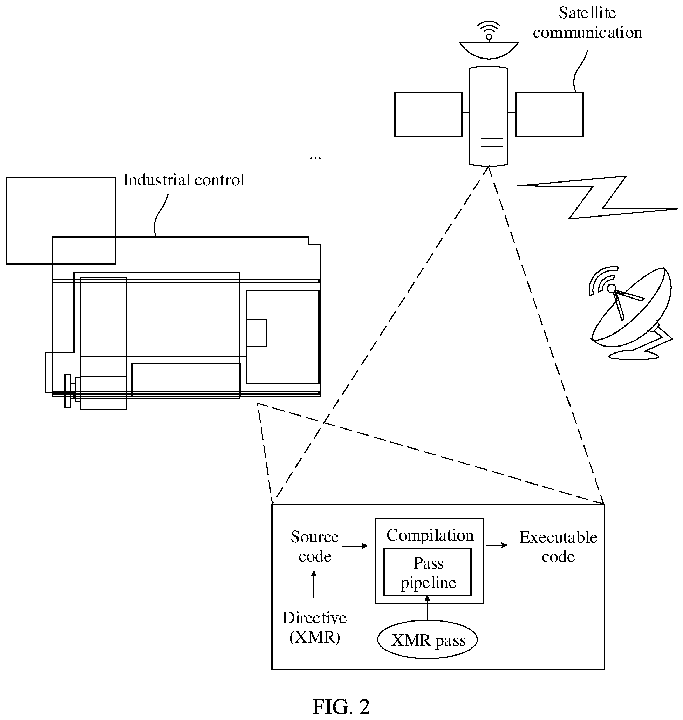

As shown in FIG. 2, the solution provided in embodiments of this application may be applied to application scenarios with high reliability requirements, such as industrial control, aerospace, satellite communication, railways, nuclear power stations, and medical treatment, or may be applied to various application scenarios in daily life and production with high requirements for memory reliability. For example, it may be applied to an application scenario in which an entity such as a bank or an organization stores important data information.

Embodiments of this application provide a new multi-modular redundancy memory management solution. No API needs to be newly added to source code. Instead, in a compilation process, for a variable modified by a directive, at least one of a memory application interface, a memory release interface, a memory read interface, or a memory write interface that uses the variable as an execution object is compiled into calling an instrumentation function (a multi-modular redundancy memory management interface). This implements multi-modular redundancy memory management without changing a memory management interface in the source code, and can maintain compatibility with memory managers such as ptmalloc. In other words, various functions of the ptmalloc manager can still be used without changing various memory application, release, and read/write interfaces in the source code. However, after compilation, when executable code is run, multi-modular redundancy memory management is performed for the variable for which the directive is added.

For ease of understanding the solution provided in embodiments of this application, related terms are briefly described.

Directive (directive): It is a compilation guide statement, which is commonly used in heterogeneous programming (such as CUDA). It guides a compiler to generate auxiliary instructions other than source program instructions to fully utilize heterogeneous hardware features and maximize system performance. In embodiments of this application, the directive is introduced into multi-modular redundancy memory management for the first time, so that multi-modular memory hardening can be implemented without changing service code. In addition, multi-modular memory hardening and conventional memory allocation coexist, to implement one track of versions of service code of multi-modular memory hardening and conventional memory allocation.

One track: It is a software development mode that uses one code repository trunk. The same code repository trunk is used during development of a plurality of versions of product software, and continuous delivery in iteration meets user requirements. One track of software code versions can reduce a quantity of versions developed concurrently for different products, reduce branches and synchronization waste, and achieve continuous evolution of a set of code and benefits of a plurality of software versions. This greatly shortens development time, reduces code maintenance costs, and ensures code quality costs. In the related technology, a solution of newly adding a call interface to source code cannot be compatible with an earlier software code version. Consequently, one track cannot be implemented.

As shown in FIG. 2, in the method provided in embodiments of this application, an upgrade may be performed based on an original code repository trunk, to implement multi-modular redundancy memory management and improve reliability. For example, specifically, a functional plug-in may be added in the compilation process for implementation. An XMR pass is a functional plug-in for upgrading multi-modular redundancy management. The functional plug-in may be added to a pass pipeline in the compilation process to implement compiler instrumentation. The source code does not need to be greatly changed.

Multi-modular redundancy (Multi-modular Redundancy, MMR): It is a fault tolerance technology that uses a plurality of independent modules to perform a same task and compares consistency to identify and correct a faulty module, ensuring that a system can still normally run when a fault occurs. When a module is faulty, the other modules can continue to work. Then, the faulty module is identified and corrected through consistency comparison, to implement system reliability and stability.

A principle of the multi-modular redundancy technology is based on a probability statistics principle. If a fault probability of each module is independent, a probability that the plurality of modules are simultaneously faulty is extremely small and can be ignored. Therefore, multi-modular redundancy can effectively improve system reliability and stability. The multi-modular redundancy technology is widely used in fields requiring high reliability, such as aerospace, railways, and nuclear power stations, to ensure safe operation of a system in extreme environments.

Triple-modular redundancy (Triple modular redundancy, TMR): Three independent modules are used to construct a multi-modular redundancy technology, which is a triple-modular redundancy technology.

Multi-modular redundancy memory management (MMR MM): It is a highly reliable memory allocator that can use a plurality of independent memory pools to allocate memory. The memory pools are independent and may be at different physical positions or in different virtual address space. When a user applies for a memory block, the allocator obtains one memory block with a same capacity from each of the plurality of independent memory pools and returns the memory blocks to the user for use. When one of the memory blocks is faulty, the faulty memory block may be identified by comparing whether content of different memory blocks is consistent, and an error of the faulty memory block is corrected, to implement highly reliable memory management. A multi-modular redundancy memory allocator is usually used in systems with high reliability and high availability, such as the aerospace, railway, and medical fields. It can effectively avoid single points of failure, and improve a fault tolerance capability and reliability of the system.

Triple-modular redundancy memory management (TMR MM): Memory is allocated from three independent memory pools for multi-modular redundancy memory management, which is called triple-modular redundancy memory management.

Application programming interface (Application Programming Interface, API): In embodiments of this application, the API is a predefined function to be called.

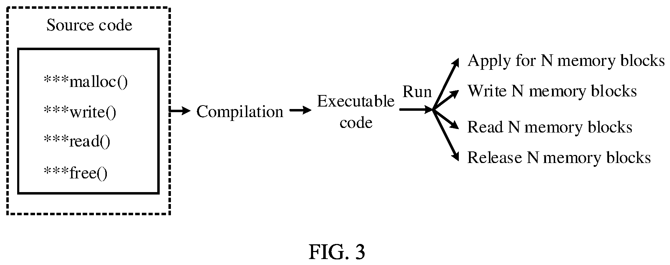

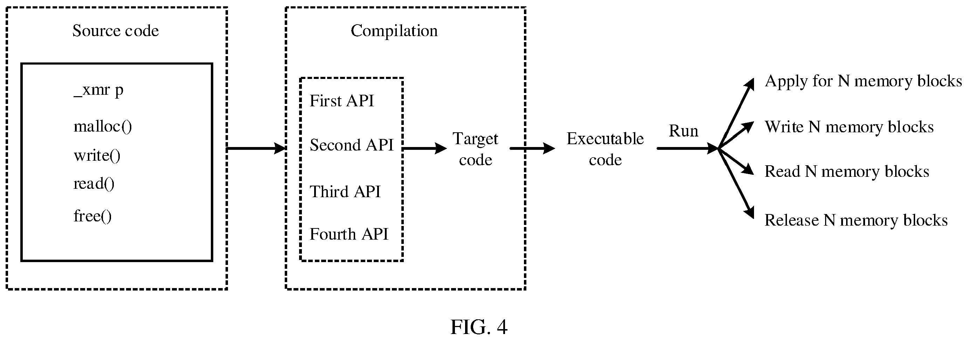

To provide a more intuitive comparison of the improvements made in the solution provided in embodiments of this application, for example, refer to FIG. 3 and FIG. 4. FIG. 3 is a diagram of a solution in a related technology. FIG. 4 is a diagram of a new solution provided in embodiments of this application. As shown in FIG. 3, in the related technology, a plurality of dedicated APIs for multi-modular redundancy management are newly added, and source code needs to be greatly changed. A call interface for the dedicated API is added to the source code, or corresponding API code is newly added. As shown in FIG. 3, the following call interfaces for the dedicated APIs are newly added to the source code: ***malloc(), ***free(), ***read(), and ***write(). After compilation, an operation corresponding to each API is performed when executable code is run. "***malloc()" and the like represent the newly added call interface for the dedicated API, which is different from a call interface in an existing general memory manager, resulting in incompatibility, that is, incompatibility with a memory management interface used in a code repository trunk.

In the solution provided in embodiments of this application, as shown in FIG. 4, in source code, an original interface does not need to be changed, but an malloc() function, a free() function, a read() function, and a write() function may continue to be called, and only a directive needs to be added to modify a variable when the variable is defined. In a compilation phase, various interfaces corresponding to the variable modified by the directive, for example, a memory application interface for calling the malloc() function, a write interface for calling the write() function, a read interface for calling the read() function, and a release interface for calling the free() function, are compiled into dedicated interfaces for multi-modular redundancy memory management through a compiler, for example, compiled into calling a first API, calling a second API, calling a third API, and calling a fourth API respectively, to obtain target code after compilation.

The first to fourth APIs are instrumentation functions, and may be pre-added as library functions to be called. When executable code corresponding to the target code is run, the first API is at least used to apply for N pieces of memory, the second API is at least used to write a value of the variable into the N pieces of memory, the third API is at least used to read values in the N pieces of memory, and the fourth API is at least used to release the N pieces of memory. The second API and the third API may further perform consistency comparison on values of a plurality of memory blocks, perform arbitration, and correct an error.

It should be noted that in FIG. 4, the first to fourth APIs are marked by a dashed-line box, indicating that in some embodiments, the first to fourth APIs may be called in a compilation phase. In another embodiment, code of the first to fourth APIs may be directly added to the target code. In other words, each interface for memory application or the like in the source code is compiled into code of a corresponding API, and the API is directly executed during running without calling the API.

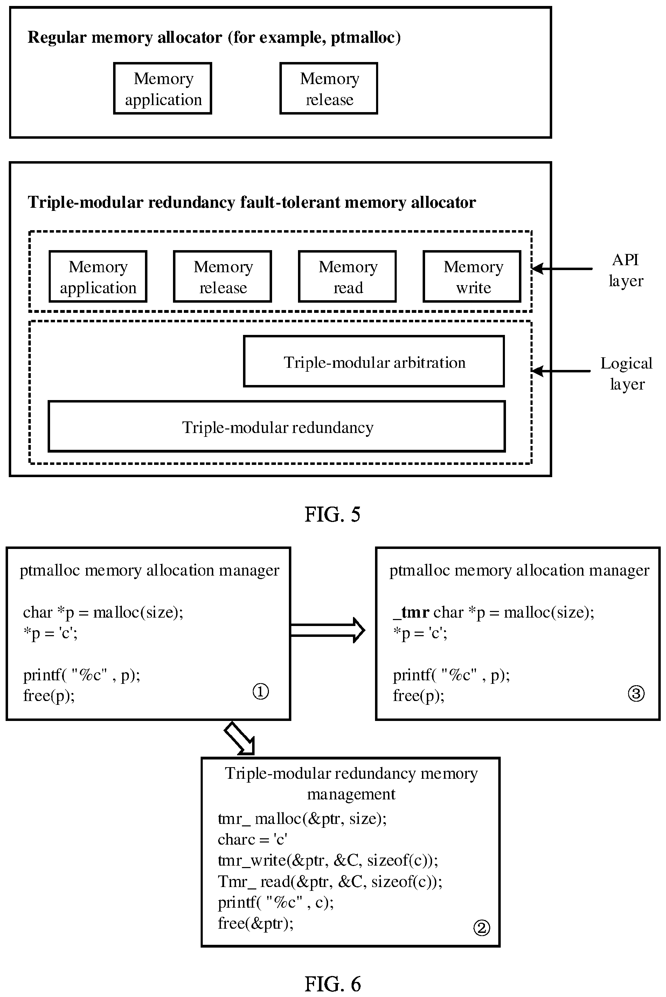

In addition, the solution provided in embodiments of this application may be executed based on a regular memory allocator shown in FIG. 5, that is, can be compatible with at least one of memory managers ptmalloc, jemalloc, and tcmalloc, without a need to newly add a dedicated memory allocator.

However, the solution in the related technology needs to be executed based on a triple-modular redundancy fault-tolerant memory allocator shown in FIG. 5, that is, cannot be compatible with an existing general memory allocator. A dedicated triple-modular redundancy fault-tolerant memory allocator needs to be newly added. For example, a multi-modular redundancy arbitration layer is added to implement application/release/read/write, consistency arbitration, and error correction of multi-modular memory, and then multi-modular redundancy memory access is implemented through a newly added multi-modular read/write API.

As shown in FIG. 6, the solution (a solution marked with ③) provided in embodiments of this application may be executed based on a regular memory allocation manager ① such as ptmalloc. No dedicated manager needs to be newly added. Only a modification directive needs to be added before a memory variable. Compared with shotgun changes in the related technology ②, changes to source code are significantly reduced. For example, only a directive "_tmr" needs to be added before a pointer variable "*p", which may be specifically implemented through a macro definition. In this way, code in a non-high-reliability scenario is almost consistent with that in a high-reliability hardening scenario (except for a few directives), ensuring one track of software versions in different scenarios.

The foregoing comparison is merely an example for description, and is not intended to limit the method provided in embodiments of this application.

Specifically, a memory management method provided in embodiments of this application may be used to perform dynamic memory allocation or static memory allocation, and can operate at two running levels of an operating system: a kernel mode and a user mode. In this way, the method provided in embodiments of this application may be specifically applied to four scenarios in two categories: user-mode multi-modular redundancy dynamic memory management (for example, ptmalloc), kernel-mode multi-modular redundancy dynamic memory management (for example, kalloc), user-mode multi-modular redundancy static memory management, and kernel-mode multi-modular redundancy static memory management.

The following separately describes the method provided in embodiments of this application from two perspectives: dynamic memory management and static memory management.

In a dynamic memory management (user mode or kernel mode) scenario, the memory management method provided in embodiments of this application may be implemented in a compilation process, and may specifically include the following procedure.

S1: Identify that a directive exists in a compilation object.

The directive is used to modify a memory variable. In other words, an object modified by the directive is the memory variable. The modified memory variable is a target variable for which multi-modular redundancy memory needs to be applied for. The directive can serve an identification purpose, so that a compiler can distinguish between a variable that requires multi-modular redundancy memory management and a variable that does not require multi-modular redundancy memory management by identifying the directive in the compilation process.

In some embodiments, the directive may be added to to-be-compiled source code as a directive modifying the memory variable. There is no need to add a new API or a new call interface to the source code. For example, when a POSIX-compatible memory application API (namely, a memory application interface) needs to be called in the source code to apply for multi-modular redundancy memory, a multi-modular redundancy directive (for example, __xmr) is added before a definition of a variable receiving the memory. The memory application interface modified by the directive is __xmr char *p = malloc(size). Optionally, the directive may be uniformly added to the source code through a macro definition, eliminating a need for manual changes one by one.

The directive may be specifically a character or a character combination that can serve an identification purpose, for example, may use one or a combination of a digit, a letter, and a special character. For example, the directive may be specifically "XMR", "xmr", "_XMR", "XMR_", "MMR", "TMR", "MMR_", "5MR", "MR5_", "M3R&", or the like. Any character that can serve a modification and identification purpose may be used as a specific expression form of the directive, and is not enumerated in embodiments of this application. The following mostly uses "MMR" or "TMR" as an example for description.

The compilation object is to-be-compiled code, which may be source code or intermediate code. Compilation of high-level language source code may be divided into frontend processing, midend processing, and backend processing. The method provided in embodiments of this application may be implemented before the source code is compiled into binary code, for example, during midend processing. Therefore, a to-be-compiled object is intermediate code that has undergone frontend processing.

For example, if the source code is in C/C++, a compilation process is as follows: preprocessing → compilation → assembly → linking, ultimately generating executable code (namely, the binary code). In this case, the compilation object may be intermediate code obtained after preprocessing. If the source code is in Java, a corresponding compilation process is as follows: For source code with a .java extension, a Java compiler (for example, javac) compiles a Java source code file into a Java bytecode file (.class file). In this case, the compilation object is the source code with the .java extension.

The directive in the compilation object may be added to code before the compilation object is compiled, for example, added to source code. In some embodiments, the directive may be uniformly added to the source code through a macro definition to modify variables that require multi-modular redundancy memory management.

It should be noted that in embodiments of this application, multi-modular redundancy memory management includes one or more of a plurality of operations such as multi-modular redundancy memory application, multi-modular redundancy memory release, multi-modular redundancy memory read, multi-modular redundancy memory write, and multi-modular redundancy memory arbitration and correction.

For ease of description, in the following, a memory variable that requires multi-modular redundancy memory management is defined as the target variable, and a memory variable that does not require multi-modular redundancy memory management is defined as a regular memory variable.

In some embodiments, the directive may be added to a code line corresponding to the target variable. The code line corresponding to the target variable may be a code line in which code for defining the target variable is located. If the code line is defined as a target code line, the code line corresponding to the target variable may be the target code line or another code line within a preset range of the target code line.

For example, in the dynamic memory management scenario, if the target variable is *p, the target code line corresponding to the target variable is _xmr char *p = malloc(size). _xmr is the directive. char *p is the code for defining the target variable. The code line in which the code for defining the target variable *p is located is **_xmr** char *p = malloc(size), which is the target code line. malloc(size) is a memory application interface for calling a malloc function. In this embodiment, the directive is added before the target variable. In another embodiment, the directive may be added to another position, for example, added after the target variable, to obtain the following code line (target code line): char *p _xmr = malloc(size). Alternatively, the directive may be added after the memory application interface, to obtain the following code line (target code line): char *p = malloc(size) _xmr. Alternatively, the directive may be added between a target variable type definition character char and the target variable *p, to obtain the following code line (target code line): char _xmr *p = malloc(size).

In another embodiment, the directive may alternatively be added to a code line adjacent or close to the target code line. For example:

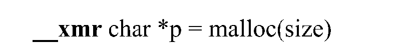

The foregoing code in the foregoing example may be changed to the following code:

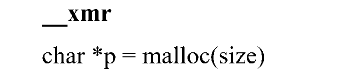

In the code example, the directive is used as a separate code line and appears in a line adjacent or close to the target code line. The directive may appear in a previous row or a next row of char *p = malloc(size), or within a preset quantity of rows before/after it, provided that the directive can identify the target variable during compilation. During actual application, a larger distance between the directive and the target variable leads to a higher compilation difficulty. "_**xmr**" is merely an example and may be replaced with other characters.

In a static memory management scenario, the directive is also added to the code line corresponding to the code for defining the target variable. However, to apply for multi-modular redundancy memory in the static memory management scenario, a memory application function does not need to be called. For example, the malloc function does not need to be called. Therefore, the memory application interface does not exist. In this case, the directive may be added before or after char *p, between char and *p, or to an adjacent or nearby code line.

Correspondingly, a manner of identifying whether the directive exists in the compilation object corresponds to a manner of adding the directive. For example, if the directive is added before the target variable, it needs to be analyzed during identification whether the directive exists before the memory variable in the code. If the directive is added after the memory application interface, it may be queried during identification whether the directive exists after the memory application interface.

In embodiments of this application, the directive can be added to modify various types of memory variables. For example, the modified memory variable may be auto (a local variable), extern (a global variable), a static variable, or the like. The static variable includes a global variable and a local variable that uses a keyword static as a storage type description. Based on a stored data type, the memory variable may be one or more of the following types: numeric, character, date, datetime, logical, currency, and the like. For example, char *p is a character variable. Compatible with an existing memory manager (for example, ptmalloc), the solution provided in embodiments of this application supports access to the memory variable in a form of a pointer.

It should be noted that in embodiments of this application, the malloc function is mostly used as an example of the memory application API for description. Actually, the solution provided in embodiments of this application is also applicable to a calloc function or a realloc function.

S2: Perform compiler instrumentation on the compilation object to obtain target code.

When being run, executable code corresponding to the target code is at least used to apply for N pieces of memory (for example, N memory blocks) corresponding to the target variable. N ≥ 2. N is an integer.

In some embodiments, performing compiler instrumentation on the compilation object is at least changing a memory application interface that uses the target variable as an object in the compilation object into calling a first API. When being run, executable code corresponding to the first API is at least used to apply for the N pieces of memory corresponding to the target variable. The first API is a function for applying for multi-modular redundancy memory, and may be predefined and added as a library function.

For example, before compiling the code into an executable binary program, the compiler changes the memory application interface for which the multi-modular redundancy directive is added into calling a multi-modular redundancy memory application interface, to apply for a plurality of pieces of memory with a same capacity from a plurality of memory pools, for example, apply for N pieces of memory, apply for a multi-modular redundancy memory management structure for unified management of a plurality of memory blocks, and return at least addresses of the plurality of memory blocks. In some embodiments, an address of the multi-modular redundancy memory management structure may be further returned.

In some embodiments, performing compiler instrumentation on the compilation object further includes: changing a read operation that uses the target variable as an object in the compilation object into calling a second API. The second API is a function for performing a read operation on multi-modular redundancy memory. When being run, executable code corresponding to the second API is at least used to read values stored in the N pieces of memory.

In the same embodiment or another embodiment, performing compiler instrumentation on the compilation object may further include: changing a write operation that uses the target variable as an object in the compilation object into calling a third API. The third API is a function for performing a write operation on multi-modular redundancy memory. When being run, executable code corresponding to the third API is at least used to write a value of the target variable into the N pieces of memory.

For example, an example of a memory read interface in the source code is a = *p. The multi-modular redundancy directive is specified during memory application for *p. In other words, *p is a memory variable. Therefore, before compiling the code a = *p into an executable binary program, the compiler converts an access form (for example, *p) of pointer read into calling a multi-modular redundancy memory read interface (the third API), for example, _xmr read. The multi-modular redundancy memory read interface (_xmr_ read) sequentially reads the values in the N pieces of memory, sequentially reads their content, checks consistency of the plurality of pieces of memory, and corrects an error of inconsistent memory. In some embodiments, the addresses of the plurality of memory blocks may be stored in the multi-modular redundancy memory management structure. The multi-modular redundancy memory read interface (_xmr read) reads the plurality of specified pieces of memory based on the multi-modular redundancy memory management structure, and returns a correct memory value in the plurality of pieces of memory.

For another example, an example of a memory write interface in the source code is *p = 10. The multi-modular redundancy directive is specified during memory application for *p. Therefore, before compiling the code into an executable binary program, the compiler converts an access form (for example, *p) of pointer write into calling a multi-modular redundancy memory write interface (the second API), for example, _xmr_write. The multi-modular redundancy memory write interface (for example, _xmr_write) sequentially updates the value in each piece of memory, checks consistency of the plurality of pieces of memory, corrects an error of inconsistent memory, and returns a correct memory value in the plurality of pieces of memory. In some embodiments, optionally, the addresses of the plurality of memory blocks may be stored in the multi-modular redundancy memory management structure. The multi-modular redundancy memory write interface (__xmr_write) sequentially writes a value of *p into the plurality of specified pieces of memory based on the multi-modular redundancy memory management structure, and returns a correct memory value in the plurality of pieces of memory.

Similarly, for compilation of a release interface, a memory release interface that uses the target variable as an object in the compilation object is changed into calling a fourth API. The fourth API is a function for releasing multi-modular redundancy memory. When being run, executable code corresponding to the fourth API is at least used to release the N pieces of memory.

For example, an example of a memory release interface in the source code is free(p). The compiler determines, based on an input parameter p in the free interface, whether a to-be-released memory variable is a regular memory variable or a target variable that requires multi-modular redundancy memory management. For the target variable, the plurality of pieces of memory applied for by malloc are sequentially released, and then the multi-modular redundancy memory management structure is released. For the regular memory variable, memory space occupied by the regular memory variable is directly released.

Specifically, changing the memory application interface that uses the target variable as an object in the compilation object into calling the first API may be changing and compiling code corresponding to the memory application interface in the source code into code for calling the first API.

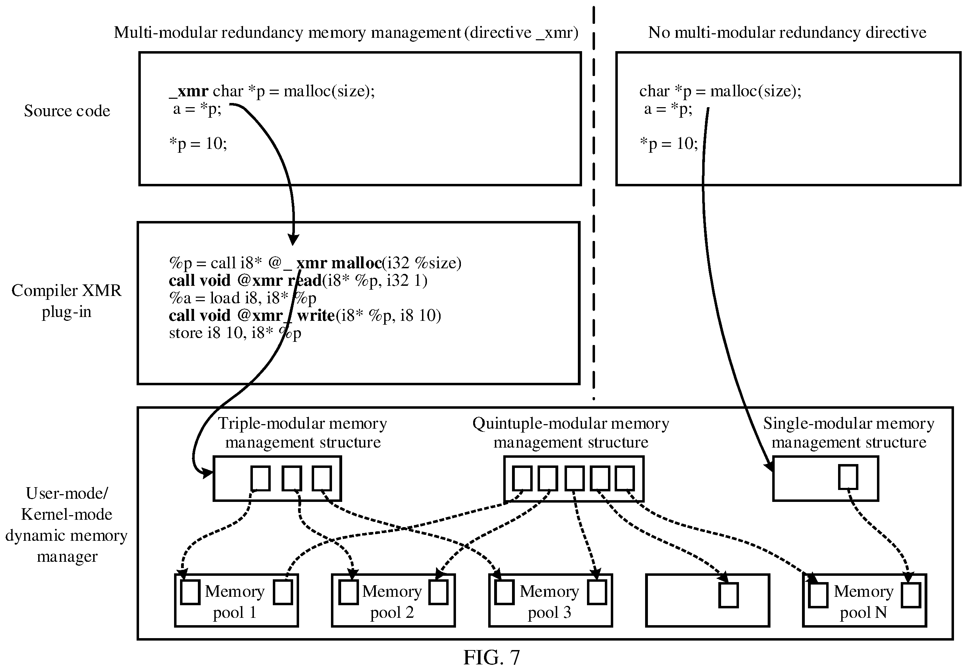

For example, FIG. 7 shows a feasible system architecture of dynamic memory allocation. The architecture includes a compiler and a user-mode/kernel-mode multi-modular redundancy dynamic memory manager. The user-mode/kernel-mode multi-modular redundancy dynamic memory manager includes a plurality of memory pools and a multi-modular redundancy memory management structure.

In the compilation process, the compiler identifies that the directive "_**xmr**" exists in "_**xmr** char *p = malloc(size)" in the source code. Therefore, the code "_**xmr** char *p = malloc(size)" corresponding to the memory application interface needs to be compiled through a compiler XMR plug-in into code "_**xmr malloc**(i32 %size)" for calling the first API. "_ _ **xmr malloc"** is a function name of the first API.

In the source code shown in FIG. 7, a = *p is the read operation that uses the target variable *p as an object. During compilation, the code is compiled through the compiler XMR plug-in into code **"call void @tmr_read**(i8* %p, i32 1)" for calling the third API. **"tmr_read"** is a function name of the third API.

*p = 10 is the write operation that uses the target variable *p as an object. During compilation, the code is compiled through the compiler XMR plug-in into code **"call void @tmr_write**(i8* %p, i8 10)" for calling the second API. **"tmr_write"** is a function name of the second API.

When the target code obtained through compiler instrumentation is run, at least operations of applying for the N pieces of memory, writing the N pieces of memory, reading the N pieces of memory, and releasing the N pieces of memory may be performed. N = 3 indicates triple-modular redundancy memory management. N = 5 indicates quintuple-modular redundancy memory management. N may be specified in the compiler XMR plug-in.

For example, in some embodiments, when the executable code corresponding to the target code obtained through compiler instrumentation is run, the multi-modular redundancy memory management structure used to manage the N pieces of memory may be further applied for. For example, when the executable code corresponding to the first API is run, the multi-modular redundancy memory management structure is first applied for, and then the N pieces of memory are applied for. When the executable code corresponding to the fourth API is run, the N pieces of memory are first released, and then the multi-modular redundancy memory management structure is released.

For example, a triple-modular memory management structure and a quintuple-modular memory management structure shown in FIG. 7 are used. When the multi-modular redundancy memory management structure is applied for, corresponding memory space needs to be reserved to store necessary information required for performing a read/write operation on the N pieces of memory, thereby playing a role in managing the N pieces of memory. In different embodiments, the memory space reserved for the management structure may include memory space occupied by the N memory blocks, or may not include memory space occupied by the N pieces of memory.

In comparison, for a regular memory variable that does not require multi-modular redundancy memory management (that is, no multi-modular redundancy directive shown in FIG. 7), compiler instrumentation does not need to be performed, and one memory block is directly applied for. In this way, compiler instrumentation is performed when there is a directive, and compiler instrumentation is not performed when there is no directive, so that a same set of code is compatible with a high-reliability memory management requirement and a non-high-reliability memory management requirement.

It should be noted that the solution provided in embodiments of this application may operate in user mode or kernel mode.

The source code in embodiments of this application may include service app code and/or non-service code.

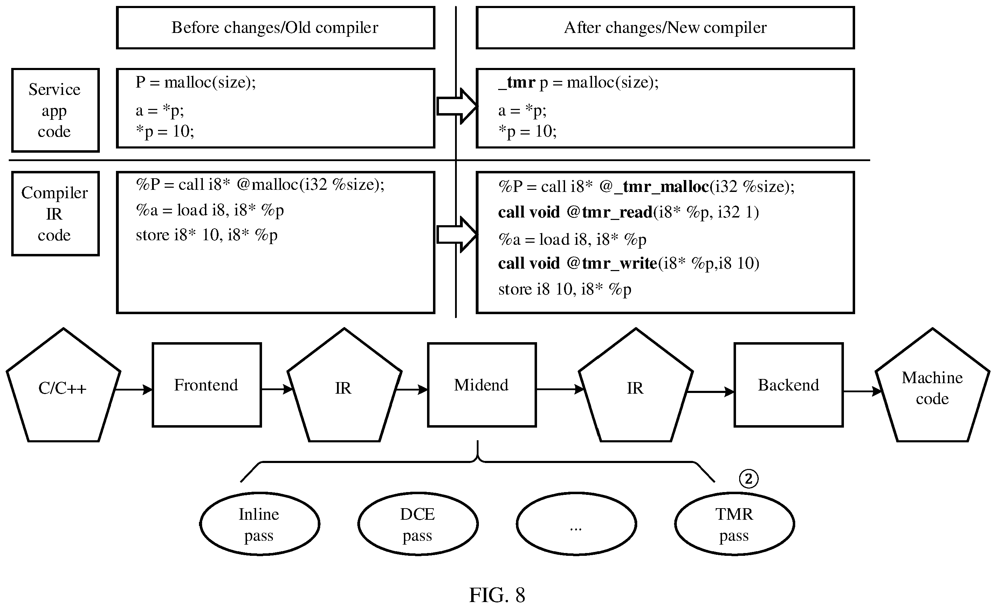

Further, as shown in FIG. 8, for example, compiler instrumentation is further described by using an example in which the source code is in C/C++.

FIG. 8 shows changes to the service app code (source code) and compiler IR code before and after compiler instrumentation. In a service app code phase, a directive "_tmr" (triple-modular redundancy) is added. In a compilation phase, the compiler IR code is changed into calling a multi-modular redundancy memory application function (the first API) "_ **xmr malloc()",** calling a multi-modular redundancy memory read function (the third API) **"call void** @_ **xmr read()",** and calling a multi-modular redundancy memory write function (the second API) "_ **xmr write()".** It should be additionally noted that when a free() function, namely, the memory release interface, appears in the source code, it is compiled into calling a multi-modular redundancy memory release function (the fourth API) "_ **xmr free()".**

As shown in FIG. 8, the compilation process may be divided into frontend (frontend), midend (midend), and backend (backend) processing. Compiler instrumentation may be implemented in a midend processing phase. For example, the compiler XMR plug-in may be specifically an XMR pass, which is added to a pass pipeline. For example, in some embodiments, it may be added at the end of the pass pipeline. A pass is a functional plug-in that needs to be used and may serve an optimization purpose in the compilation process. The pass pipeline is a plug-in sequence. For example, LLVM (Low Level Virtual Machine) is a framework system for building compilers. For specific compilation optimization, LLVM needs to use a constant set of passes. The constant set of passes is the pass pipeline. In embodiments of this application, an inline pass, a DCE pass, ..., and the XMR pass form a pipeline after compiler instrumentation. It should be noted that in another embodiment, the XMR pass may alternatively be added to another position in the pipeline, and is not limited to being added at the end of the pipeline.

Optionally, a compilation switch used to control whether to start the XMR pass may be set. If the switch is turned on, compiler instrumentation is performed. If the switch is turned off, compiler instrumentation is not performed.

It should be additionally noted that in the compilation process, to identify the directive, a directive attribute further needs to be added in a source code analysis and identification stage. In a compilation procedure, a source code analysis and identification stage, namely, a frontend processing process, may include three phases: lexical analysis, syntactic analysis, and semantic analysis, to obtain intermediate code. Lexical analysis is performed on the source code to obtain lexical tokens. Syntactic analysis is performed on the lexical tokens to obtain a syntax tree. Semantic analysis is performed on the syntax tree to obtain the intermediate code. In some embodiments of this application, attribute identification for the directive needs to be added to at least one of a lexical analysis layer, a syntactic analysis layer, or a semantic analysis layer. For example, if the directive in the source code is "tmr_", semantic recognition for the characters "tmr_" needs to be added in the source code analysis and identification stage.

In some embodiments, the directive needs to be added only during memory application for the target variable. After the application, the directive does not need to be added during read, write, and release for the target variable. Attribute information of the target variable needs to be added in the compilation process, for example, to at least one of the lexical analysis layer, the syntactic analysis layer, or the semantic analysis layer, so that the compiler can identify the variable as a target variable that requires multi-modular redundancy memory management.

The target code is obtained through compiler instrumentation. In some embodiments, the target code may be IR (intermediate representation, intermediate representation) code obtained after "midend" processing shown in FIG. 8. Backend processing is performed on the target code to obtain machine code (the executable code).

The compilation process for C/C++ may alternatively be divided into the following plurality of phases: preprocessing, compilation, assembly, and linking. In another embodiment, the target code may be code after compilation and before assembly.

If the source code is in Java, the target code obtained through compiler instrumentation is code with a .class extension, namely, a Java bytecode file.

It should be noted that a product form corresponding to the method provided in embodiments of this application may be an application, a program upgrade package, a functional plug-in, or the like. For example, a functional plug-in TMR pass shown in FIG. 8 is used to upgrade a software version, to improve reliability.

The method provided in embodiments of this application may implement static memory management in addition to dynamic memory management.

When the modified memory variable is a static (static) variable or a global variable, a static memory management solution is applicable. The static (static) variable includes a static local variable and a static global variable. Different from dynamic memory management, static memory management is performed in a centralized and unified program segment of the compiler. When a binary program is loaded, an OS applies for memory at a time. When the program exits or the OS is shut down, the memory is released at a time.

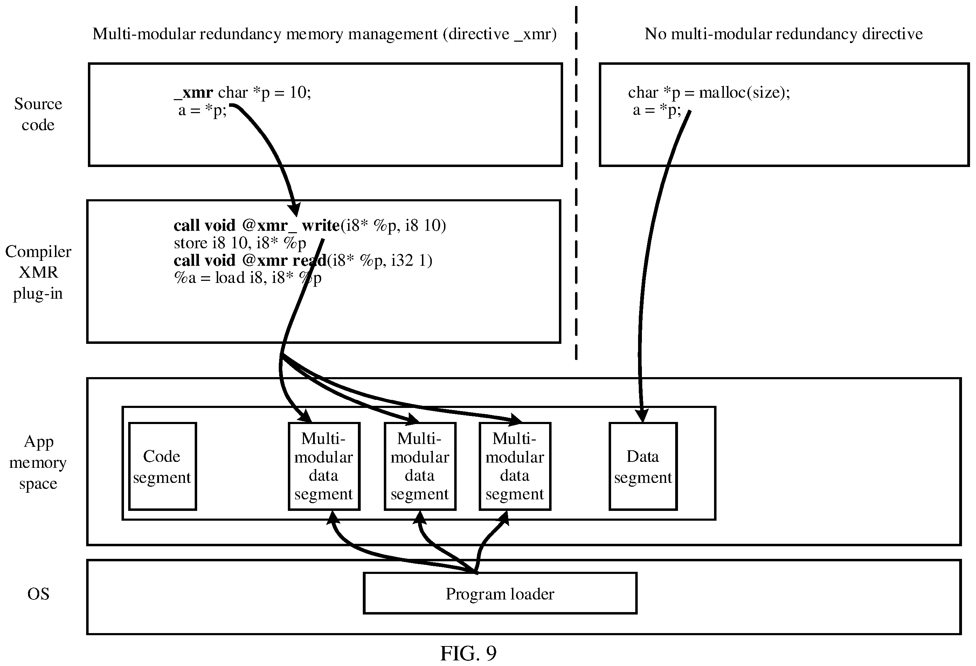

As shown in FIG. 9, static memory management may be performed based on a system architecture shown in FIG. 9. The system architecture includes a program loader or an OS loader, a memory manager, and a compiler. App memory space is memory space allocated by the memory manager to an app.

Specifically, a static memory management method provided in embodiments of this application may include the following procedure.

S10: Identify that a directive exists in a compilation object.

In static memory management, the directive is used to modify a static (static) variable or a global variable, to represent that a modified memory variable is a target variable for which multi-modular redundancy memory needs to be applied for.

S20: Perform compiler instrumentation on the compilation object to obtain target code.

When being run, executable code corresponding to the target code is at least used to apply for N pieces of memory corresponding to the target variable. N ≥ 2. N is an integer.

In some embodiments, different from dynamic memory management, compiler instrumentation for a memory application interface and a memory release interface is as follows:

### Memory application:

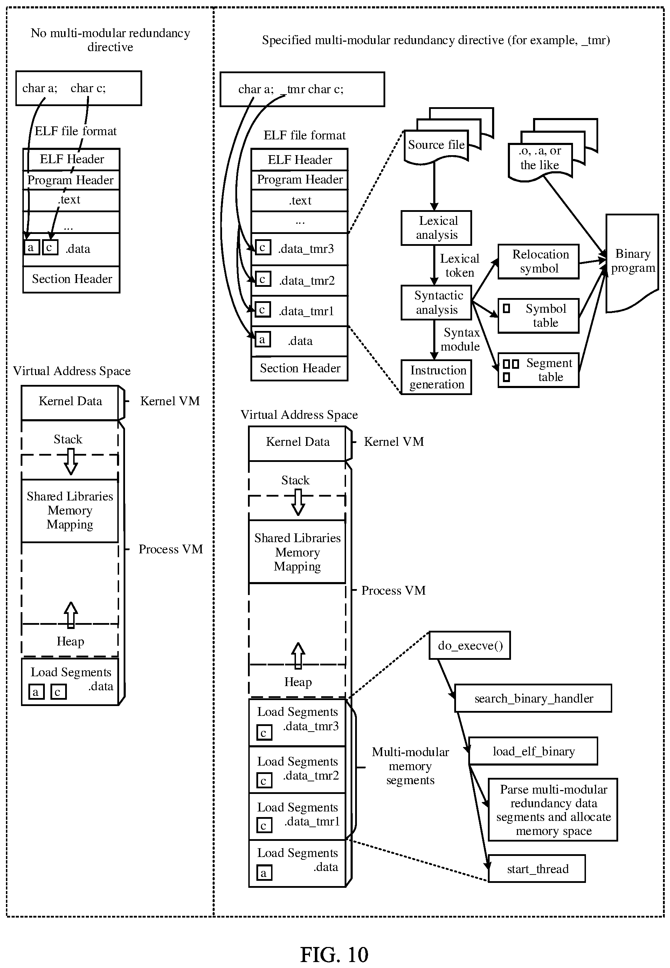

The compiler links a definition of a variable for which a compilation directive is specified to a multi-modular data segment of a binary program (executable code). For example, with reference to FIG. 10, when a specified multi-modular redundancy directive (for example, _tmr) exists in the compilation object, a definition of a variable c for which the directive is specified is linked to multi-modular memory segments ".data_tmr1, .data_tmr2, and .data_tmr3" (namely, multi-modular data segments) of the binary program. A definition of a variable a for which no compilation directive is specified is linked to an original data segment (for example, .data) of the binary program.

Specifically, taking triple-modular as an example, in lexical analysis and syntactic analysis phases, the compiler identifies a variable symbol for which a compilation directive such as "tmr" is specified, and stores the symbol in a symbol table; and adds three multi-modular redundancy data segments (for example, .data_tmr1, .data_tmr2, and .data_tmr3), each used to store variable data of each module.

In FIG. 10, char a represents a character variable a, char c represents a character variable c, ELF Header represents an ELF file header, Program Header represents a program header, .text represents text, data represents a data segment, and Section Header represents a segment header. Kernel Data represents kernel data, Stack represents a stack, Heap represents a heap, Shared Libraries Memory Mapping represents a memory-mapped region for shared libraries, and Load Segments .data represents load segment data. do_execve(), search_binary_handler, load_elf_binary, and start_thread are functions.

When loading the program or an OS, the program loader or the OS loader parses the multi-modular redundancy data segments in the binary program, and uniformly applies for memory space for the plurality of multi-modular redundancy data segments.

### Memory release:

When the program exits or the OS is shut down, the program loader uniformly releases the plurality of multi-modular redundancy data segments.

For a memory read interface that uses the memory variable (target variable) modified by the directive as an object, for example, *p as the target variable and a = *p as the read interface, compiler instrumentation for the read interface is as follows:

The multi-modular redundancy directive is specified during memory application for *p. Therefore, before compiling the code into an executable binary program, the compiler converts an access form (for example, *p) of pointer read into calling a multi-modular redundancy memory read interface (for example, __xmr_read).

The multi-modular redundancy memory read interface (for example, _xmr_read) sequentially reads content of a plurality of specified pieces of memory based on a multi-modular memory management structure, checks consistency of the plurality of pieces of memory, corrects an error of inconsistent memory, and returns a correct memory value in the plurality of pieces of memory.

Compiler instrumentation for a write interface (for example, *p = 10) is as follows:
The multi-modular redundancy directive is specified during memory application for *p. Therefore, before compiling the code into an executable binary program, the compiler converts an access form (for example, *p) of pointer write into calling a multi-modular redundancy memory write interface (for example, _xmr_write).

The multi-modular redundancy memory write interface (for example, _xmr_write) sequentially updates values in the plurality of specified pieces of memory based on the multi-modular memory management structure, checks consistency of the plurality of pieces of memory, corrects an error of inconsistent memory, and returns a correct memory value in the plurality of pieces of memory.

It can be learned based on the foregoing embodiments that in static memory management, performing compiler instrumentation on the compilation object to obtain the target code may include at least one of the following:

Memory application: Link a definition that uses the target variable as an object in the compilation object to a multi-modular data segment of a binary program, to obtain executable code. The executable code is used to apply for the N pieces of memory corresponding to the target variable when the executable code is loaded or an operating system is loaded.

Memory read: Change a read interface that uses the target variable as an object in the compilation object into calling a second API. The second API is a function for performing a read operation on multi-modular redundancy memory. When being run, executable code corresponding to the second API is at least used to read values stored in the N pieces of memory.

Memory write: Change a write operation that uses the target variable as an object in the compilation object into calling a third API. The third API is a function for performing a write operation on multi-modular redundancy memory. When being run, executable code corresponding to the third API is at least used to write a value of the target variable into the N pieces of memory.

The following lists several specific embodiments.

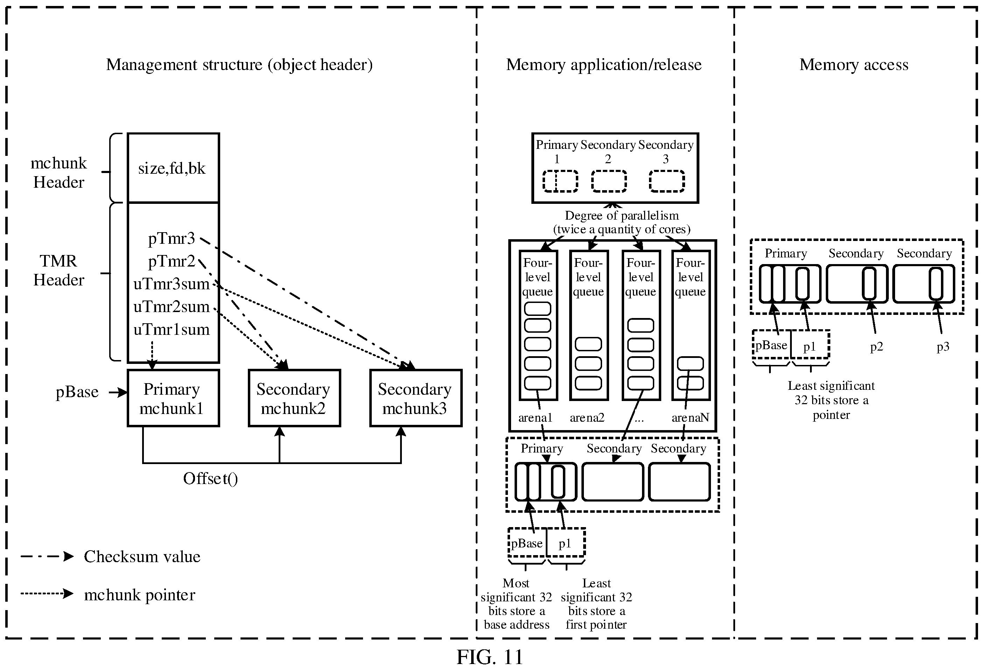

As shown in FIG. 11, in a specific embodiment, a TMR header is added based on a ptmalloc memory management structure, and a fat pointer (fat pointer, also referred to as a wide pointer) is used to implement TMR memory tracking. Specific implementation steps are as follows:
S11: Identify a directive in a compilation object. In this embodiment, the compilation object is C/C++ source code, a target variable is *p, and a code line (target code line) corresponding to the target variable is _xmr char *p = malloc(size). "_xmr" is the directive. "char *p" is a definition of the target variable. "malloc()" is a memory application interface.

The memory application interface "malloc()" is a POSIX-compatible memory application API. POSIX stands for Portable Operating System Interface (Portable Operating System Interface), which is a collective term for a series of interrelated standards that define APIs for running software on various UNIX operating systems. Its formal designation is IEEE Std 1003, and its international standard name is ISO/IEC 9945. The method provided in embodiments of this application compiles POSIX-compatible memory management interfaces for memory application, release, read, write, and the like, and can be compatible with the existing ISO/IEC 9945 standard. Multi-modular redundancy memory management is implemented without changing a memory management interface in the existing standard. The related technology cannot be compatible with POSIX because a new memory management interface is used in source code.

It should be noted that in embodiments of this application, a ptmalloc memory manager is mostly used as an example for description. Actually, the method provided in embodiments of this application can also be compatible with jemalloc, tcmalloc, and other memory managers.

In this embodiment, the directive is added before the target variable, so that during identification, the directive may be first identified, and then a memory variable after the directive is determined as the target variable. Therefore, a new attribute needs to be added for the modified memory variable. The attribute is used to represent that the memory variable requires multi-modular redundancy memory management. Specifically, attribute information of the target variable may be added in a source code analysis and identification stage during compilation, for example, to at least one of a lexical analysis layer, a syntactic analysis layer, or a semantic analysis layer. In this way, in a compilation process, another operation that uses the target variable as an object, for example, a release, read, and/or write interface, can be identified as an object on which compiler instrumentation needs to be performed, that is, calling an original regular function is changed into calling a second API, a third API, or a fourth API, without adding a directive.

S12: Perform compiler instrumentation on the compilation object to obtain target code.

In this embodiment, performing compiler instrumentation on the compilation object may be performing compiler instrumentation on a memory management interface that uses the target variable as an object. The memory management interface includes at least one of a memory application interface, a memory read interface, a memory write interface, and a memory release interface. Compiler instrumentation may be specifically performed as follows:
Before a compiler compiles the compilation object (source code or intermediate code) into an executable binary program, the following procedure is added for the memory application interface (for example, _xmr char *p = malloc(size)) for which a multi-modular redundancy directive is added:
Preprocessing: Reserve memory space for a TMR management structure and apply for the TMR management structure. The TMR management structure is a management structure newly added based on an original ptmalloc management structure. For example, as shown in FIG. 11, the TMR header is the newly added TMR management structure, which is used to manage a plurality of pieces of memory occupied by the target variable.

The memory space may be reserved for the TMR management structure based on various existing memory reservation methods, for example, based on an mmeblock management mechanism, and may be reserved from available physical memory of a system or reserved memory of a user.

The TMR management structure includes at least the TMR header. Optionally, the TMR management structure may further include an mchunk header and address space used to apply for three pieces of memory.

Application: After applying for the TMR header, apply for three independent memory blocks from an idle queue. In this embodiment, triple-modular redundancy memory management is used as an example for description. Specifically, for each target variable, three pieces of memory need to be applied for its use. For example, as shown in FIG. 11, the following three memory blocks are applied for: primary mchunk1, secondary mchunk2, and secondary mchunk3.

Allocation: After obtaining the three independent memory blocks, uniformly return start addresses of the memory blocks to the TMR management structure. Specifically, in this embodiment, base addresses of secondary mchunk2 and secondary mchunk3 are returned to the TMR header. pTmr3 is a memory unit used to store the base address of mchunk3. pTmr2 is a memory unit used to store the base address of mchunk2.

Returning the wide pointer: Use a most significant bit of the fat pointer to store a base address (pBase shown in FIG. 11) of primary mchunk1, and a least significant bit to store a first pointer. The wide pointer is a pointer that occupies bytes of two regular pointers. The first pointer is a regular pointer that occupies half the bytes of the wide pointer. For example, in this embodiment, the wide pointer occupies 64 bits (8 bytes), and the first pointer occupies 32 bits. The wide pointer, fat pointer, may be (pBase, p1), and p1 is the first pointer.

The first pointer points to a memory address that is in the primary memory block mchunk1 and that is used to store a value of the target variable. The base address is the start address of the memory block. The memory address to which the first pointer points is an address at which the value of the target variable is actually stored.

In another embodiment, the most significant bit of the wide pointer may alternatively be used to store a base address of the TMR header. In other words, when the management structure is applied for, the base address of the TMR header is returned as the most significant bit of the fat pointer, and the first pointer as the least significant bit of the fat pointer.

The memory address to which the first pointer points may be an address that is in the primary memory block mchunk1 and that is returned after a write operation is performed on the three memory blocks. Memory addresses that are in secondary mchunk2 and secondary mchunk3 and that are used to store the value of the target variable do not need to be returned.

In this way, N pieces of memory can be applied for through the foregoing operations. When TMR memory is accessed through pointer read/write, pBase is found through a compiler instrumentation function, to find the address of the TMR header. Then, the three independent memory blocks are sequentially obtained, and a read/write operation is performed on them. Data consistency of the three pieces of memory is compared, correct data is obtained through arbitration, and incorrect data is corrected.

Specifically, for example, compiler instrumentation for the memory read interface is as follows:
For example, the memory read interface in the compilation object is a = *p. The multi-modular redundancy directive is specified during memory application for *p. Therefore, before compiling the code into an executable binary program, the compiler converts an access form of pointer read, for example, *p, into the following procedure:
The base address (pBase) of primary mchunk1 is obtained through the most significant bit of the fat pointer, and the first pointer (p1) of primary mchunk1 is obtained through the least significant bit.

Next, the base address of the TMR header is obtained based on the base address pBase of the primary memory block mchunk1, and then the base addresses of secondary mchunk2 and secondary mchunk3 are obtained.

When the memory management structure is applied for, memory space that needs to be occupied by the TMR header is reserved, and an offset (a first offset) of the base address of the primary memory block mchunkl relative to the base address of the TMR header is specified. The first offset is a known constant. For example, the first offset is constant at m bytes. When a read operation is performed, the base address of the primary memory block mchunk1 is obtained as pBase based on the most significant bit of the wide pointer. The base address of the TMR header can be obtained by adding or subtracting the first offset to or from pBase, for example, adding or subtracting m bytes.

Then, pointers p1, p2, and p3 of corresponding types of memory at corresponding positions in primary mchunk1, secondary mchunk2, and secondary mchunk3 are calculated based on pBase and p1. There are the following two specific calculation manners.

Manner 1: p1 is a second offset.

In a feasible implementation, the memory address to which the first pointer p1 points may be an offset address relative to pBase. In other words, p1 represents an offset (the second offset) relative to the primary memory block mchunkl. Because the TMR header stores the base addresses of the secondary memory block mchunk2 and the secondary memory block mchunk3, the base address (pTmr2) of the secondary memory block mchunk2 and the base address (pTmr3) of the secondary memory block mchunk3 can be obtained after the base address of the TMR header is obtained. The base address of the secondary memory block mchunk2 plus the second offset is a memory address corresponding to a second pointer, namely, an address used to store the value of the target variable. The base address of the secondary memory block mchunk3 plus the second offset is a memory address corresponding to a third pointer, namely, an address used to store the value of the target variable.

Manner 2: A second offset is an offset of p1 relative to pBase.

In another feasible implementation, the memory address to which the first pointer p1 points may be an absolute address. In this case, the second offset is the offset of p1 relative to the base address pBase of the primary memory block mchunkl. The second offset of p1 relative to pBase is first calculated. Because the TMR header stores the base addresses of the secondary memory block mchunk2 and the secondary memory block mchunk3, the base address (pTmr2) of the secondary memory block mchunk2 and the base address (pTmr3) of the secondary memory block mchunk3 can be obtained after the base address of the TMR header is obtained. The base address of the secondary memory block mchunk2 plus the second offset is a memory address corresponding to a second pointer, namely, an address used to store the value of the target variable. The base address of the secondary memory block mchunk3 plus the second offset is a memory address corresponding to a third pointer, namely, an address used to store the value of the target variable.

In this way, the second pointer p2 and the third pointer p3 can be obtained in Manner 1 or Manner 2 above. Data at the p1, p2, and p3 addresses is read, data consistency of the three pieces of memory is compared, correct data is obtained through arbitration, and incorrect data is corrected.

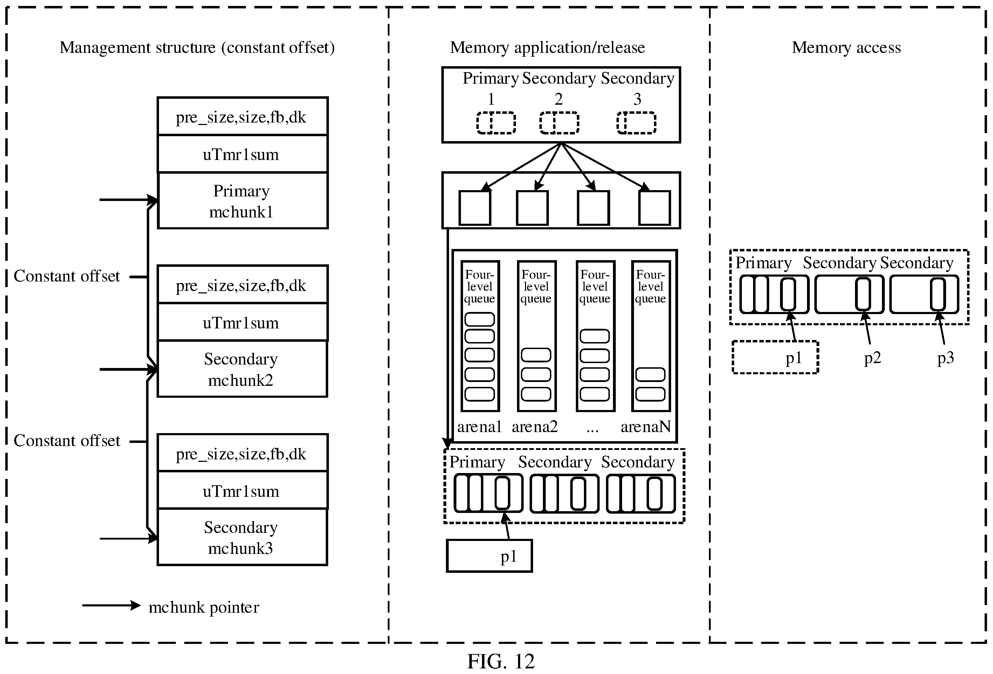

For example, in FIG. 12, a TMR header is further used to store values of three memory blocks. For example, three memory units uTmr3sum, uTmr2sum, and uTmrlsum are respectively used to store values of secondary mchunk3, secondary mchunk2, and primary mchunk1 for quick comparison. After the comparison, a correct value may be written into the three memory blocks.

Specifically, for example, compiler instrumentation for the memory write interface may be as follows:
For example, the memory write interface in the source code is *p = 10. The multi-modular redundancy directive is specified during memory application for *p. Therefore, before compiling the code into an executable binary program, the compiler converts an access form of pointer write, for example, *p = 10, into the following procedure:
The base address (pBase) of primary mchunk1 is obtained through the most significant bit of the fat pointer, and the first pointer (p1) of primary mchunk1 is obtained through the least significant bit.

The value of the target variable is written to the address to which the first pointer P1 points. For example, "10" is written. Next, the base address of the TMR header is obtained based on the base address pBase of the primary memory block mchunk1, and then the base addresses of secondary mchunk2 and secondary mchunk3 are obtained.

For a specific manner of obtaining the base addresses of secondary mchunk2 and secondary mchunk3 based on pBase, refer to compiler instrumentation for the read interface. Details are not described herein again.

Then, pointers p2 and p3 of corresponding types of memory at corresponding positions in secondary mchunk2 and secondary mchunk3 are obtained based on p1 and the base addresses of secondary mchunk2 and secondary mchunk3. For a specific manner, refer to Manner 1 or Manner 2 above. Details are not described herein again.

The value of the target variable is written to addresses to which p2 and p3 point.

After the value is written, data at the p1, p2, and p3 addresses may be read, data consistency of the three pieces of memory is compared, correct data is obtained through arbitration, and incorrect data is corrected.

For example, compiler instrumentation for the memory release interface may be as follows:
For a memory release interface free(p) in the compilation object, the multi-modular redundancy directive is specified during memory application for an input parameter p. Therefore, before compiling the code into an executable binary program, the compiler converts the memory release interface into the following procedure:
The three memory blocks are released; and the TMR header is released.

In conclusion, in the specific embodiment shown in FIG. 11, preprocessing is first performed to apply for the reserved memory space (size) and the TMR management structure. Next, the three memory blocks are applied for from a four-level idle queue. A degree of parallelism of the idle queue is twice a quantity of cores. After the three memory blocks are obtained, they are managed through the TMR header. Then, the most significant bit of the fat pointer is used to store the base address pBase of the primary memory block or the base address of the TMR header, and the least significant bit is used to store a conventional pointer (the first pointer). In this way, when the first pointer is accessed, pBase can be found through the compiler instrumentation function, to perform multi-modular comparison. When a read/write operation is performed, compatibility between memory access and conventional heap memory access can be implemented. First, during compilation, a pointer access operation is replaced with a read/write instrumentation function (namely, the second API or the third API). The read/write instrumentation function may implement the following operations during running: Obtain pBase through the most significant bit of the fat pointer, and a pointer (p) of a corresponding type of memory in the primary memory block mchunk1 through the least significant bit. Obtain the base addresses of the secondary memory block mchunk2 and the secondary memory block mchunk3 based on pBase. Calculate the pointers p1, p2, and p3 of the corresponding types of memory at the corresponding positions in the primary memory block mchunk1, the secondary memory block mchunk2, and the secondary memory block mchunk3 based on pBase and p. Perform triple-modular redundancy comparison and return an execution result.

A plurality of other embodiments may be summarized based on the description of the foregoing specific embodiment. In these embodiments, the N pieces of memory may include one primary memory block and (N - 1) secondary memory blocks. The target code obtained through compiler instrumentation includes calling a first API. When executable code corresponding to the first API is run, a first multi-modular redundancy memory management structure may be applied for, the N pieces of memory corresponding to the target variable are then applied for based on the first multi-modular redundancy management structure, and base addresses respectively corresponding to the N pieces of memory are returned. The first multi-modular redundancy management structure includes at least an object header (header). The header is at least used to store the base addresses of the (N - 1) secondary memory blocks. In another embodiment, the first multi-modular redundancy management structure may include an object header (header) and first address space. The N pieces of memory corresponding to the target variable are applied for in the first address space. For example, when the first multi-modular redundancy management structure is applied for, an offset between a start address of the first address space and a start address of the header may be specified. A start address of the primary memory block is the start address of the first address space.

Then, a pointer used to access the target variable is defined as a wide pointer; and the wide pointer is returned. In the wide pointer, a most significant bit is used to store a first base address, and a least significant bit is used to store a first pointer. The first base address is a base address of the primary memory block mchunk1. The first pointer points to a memory address that is in the primary memory block mchunk1 and that is used to store the value of the target variable.

In the same embodiment or another embodiment, the target code obtained through compiler instrumentation further includes calling the second API. When executable code corresponding to the second API is run, a second base address and a second pointer to an N^{th} pointer that correspond to the (N - 1) secondary memory blocks are determined based on the first base address pBase and the first pointer p1. The second base address is a base address of the header. The second pointer to the N^{th} pointer respectively point to memory addresses that are in the (N - 1) secondary memory blocks and that are used to store the value of the target variable. The value of the target variable in the memory blocks may be accessed through the first pointer and the second pointer to the N^{th} pointer.

Determining, based on the first base address and the first pointer, the second base address and the second pointer to the N^{th} pointer that correspond to the (N - 1) secondary memory blocks may be determining the second base address based on the first base address and a first offset, where the first offset is an offset of the second base address relative to the first base address, and the first offset is a constant; reading, based on the second base address, the base addresses corresponding to the (N - 1) secondary memory blocks; determining a second offset of the memory address to which the first pointer points relative to the first base address; and determining the second pointer to the N^{th} pointer based on the second offset and the base addresses corresponding to the (N - 1) secondary memory blocks.

It should be noted that the base addresses of the secondary memory blocks are stored starting from the start address (namely, base address) of the header. In some embodiments, the header is further used to store N values returned from the first pointer to the N^{th} pointer. The second API may further compare the N returned values in the N pieces of memory, determine a correct value through arbitration, return the correct value, and correct a faulty memory block, for example, write the correct value into the faulty memory block.

In the foregoing specific embodiment and other embodiments that can be obtained therefrom, the TMR header is added based on the ptmalloc memory management structure, the fat pointer is used to implement TMR memory tracking, service-insensitive TMR heap memory read/write is implemented through multi-modular redundancy computing and instrumentation, and mixed use of conventional heap memory and TMR heap memory at a plurality of granularities is supported.

The following lists another embodiment. As shown in FIG. 12, in the another embodiment, TMR memory tracking is implemented through a constant offset, and service-insensitive TMR heap memory read/write is implemented through instrumentation for a multi-modular redundancy read/write function. A fat pointer is replaced with the constant offset to avoid pointer size multiplication, so that work of a compiler is simple. Specifically, the following procedure may be included:
S21: Identify a directive in a compilation object.

For the identification of the directive, refer to the embodiment corresponding to FIG. 11. Details are not described herein again.

S22: Perform compiler instrumentation on the compilation object to obtain target code.

For example, for each operation of multi-modular redundancy memory application, release, read, and write based on the directive, specific implementation steps are as follows:
In source code, when a POSIX-compatible memory application API is called, a multi-modular redundancy directive __xmr is added before a definition of a corresponding memory variable, for example, char *p, indicating that multi-modular redundancy memory application is needed for *p.

Before the compiler compiles the code into an executable binary program, the following procedure is added for a memory application interface for which the multi-modular redundancy directive is added, for example, _xmr char *p = malloc(size).

Preprocessing: Reserve memory space for a TMR management structure and apply for the TMR management structure. As shown in FIG. 12, the TMR management structure applied for in this embodiment includes three pieces of memory space with the constant offset and a same structure, each mapped to an underlying memory pool.

Application: Apply for three independent memory blocks from three independent underlying memory pools.

Allocation: Allocate the three independent memory blocks.

Because offsets between a primary memory block mchunk1, a secondary memory block mchunk2, and a secondary memory block mchunk3 are a known constant offset, only an address of the primary memory block mchunk1 needs to be recorded. Addresses of the other two independent memory blocks can be sequentially obtained by adding the known constant offset to the address. A read/write operation is performed on the memory blocks, data consistency of the three pieces of memory is compared, correct data is obtained through arbitration, and incorrect data is corrected.

A memory release interface, for example, free(p), is changed into calling a fourth API, to first release the three pieces of memory, and then release the management structure.

For example, a memory read interface is a = *p. The multi-modular redundancy directive is specified during memory application for *p. Therefore, before compiling the code into an executable binary program, the compiler converts an access form (for example, *p) of pointer read into the following procedure:
Because the offsets between the primary memory block mchunk1, the secondary memory block mchunk2, and the secondary memory block mchunk3 are the known constant offset, the address (p1) of the primary memory block mchunk1 is obtained, and the addresses (p2 and p3) of the other two independent memory blocks can be sequentially obtained by adding the known constant offset to the address of the primary memory block mchunk1.

Data in p1, p2, and p3 memory is sequentially read, data consistency of the three pieces of memory is compared, correct data is obtained through arbitration, incorrect data is corrected, and a correct memory value in the plurality of pieces of memory is returned.

A compilation manner of a memory write interface (for example, *p = 10) is similar to that of the memory read interface. Details are not described herein again.

A plurality of other embodiments may be summarized based on the description of the foregoing another embodiment. In these embodiments, the target code obtained through compiler instrumentation includes calling a first API. The first API applies for N pieces of memory corresponding to a target variable. A base address of a t^{th} memory block has a constant offset relative to a base address of a (t - 1)^{th} memory block. 2 ≤ t ≤ N. In other words, in the N pieces of memory that are applied for, an offset between base addresses of two adjacent memory blocks is a fixed value. In another embodiment, the first API may first apply for a second multi-modular redundancy memory management structure. The second multi-modular redundancy management structure includes second address space. The N pieces of memory may be applied for in the second address space.

In the same embodiment or another embodiment, the N pieces of memory include one primary memory block and (N - 1) secondary memory blocks. The target code includes calling a second API. When executable code corresponding to the second API is run, a second pointer to an N^{th} pointer are determined based on a first pointer and the constant offset. The first pointer points to a memory address that is in the primary memory block and that stores a value of the target variable. The memory address to which the first pointer points may be an offset address or an absolute address. The value of the target variable in the memory blocks may be read through the first pointer and the second pointer to the N^{th} pointer.

In the embodiment corresponding to FIG. 12 and other embodiments obtained therefrom, a wide pointer is replaced with the constant offset to avoid pointer size multiplication, so that work of the compiler is simple. However, because a TMR memory variable (the target variable) and a conventional memory variable (regular memory variable) cannot be distinguished in a binary code phase, instrumentation is required for all read/write operations.

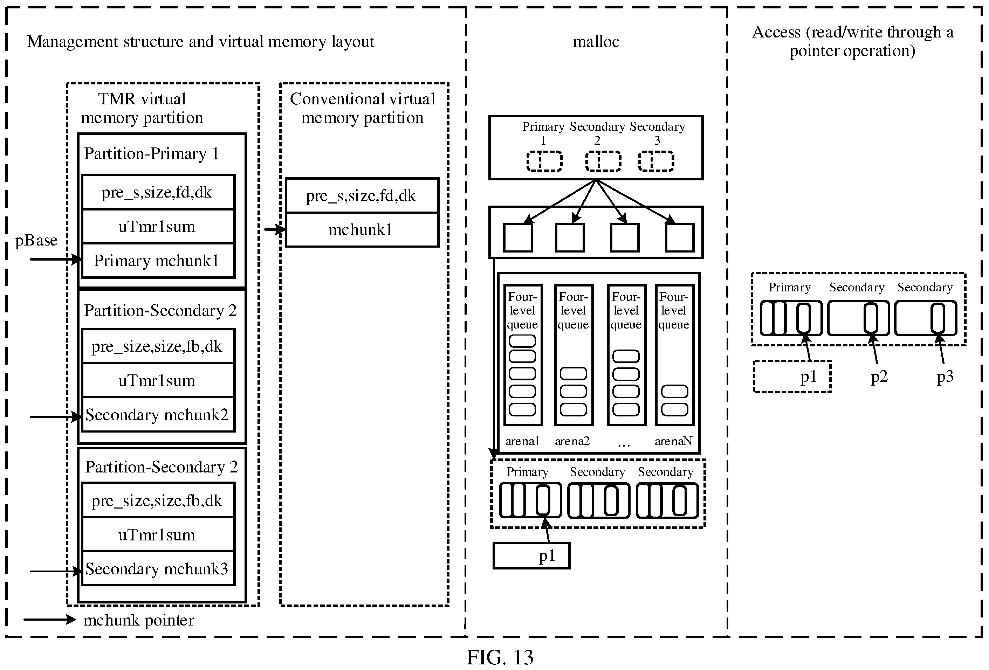

The following lists still another embodiment. As shown in FIG. 13, in the still another embodiment, service-insensitive TMR memory management is implemented through constant partitioning + virtual address separation + compiler instrumentation. In this embodiment, a fat pointer is still replaced with a constant offset to avoid pointer size multiplication, so that work of a compiler is simple. A TMR memory region and a conventional memory region are distinguished through virtual address separation, so that instrumentation is required only for TMR memory read/write operations.

As shown in FIG. 13, when a management structure is applied for, a TMR virtual memory partition (namely, a TMR VM partition) and a conventional virtual memory partition may be applied for, that is, two pieces of independent memory space are applied for, to implement storage separation of a target variable and a regular memory variable.

Specifically, the following procedure may be included:
S31: Identify a directive in a compilation object.

For the identification of the directive, refer to the embodiment corresponding to FIG. 11. Details are not described herein again.

S32: Perform compiler instrumentation on the compilation object to obtain target code.

For example, for each operation of multi-modular redundancy memory application, release, read, and write based on the directive, specific implementation steps are as follows:
Before the compiler compiles the code into an executable binary program, the following procedure is added for a memory application interface for which the multi-modular redundancy directive is added, for example, _xmr char *p = malloc(size).

Preprocessing: Apply for the TMR virtual memory partition (a first virtual memory region) and the conventional virtual memory partition (a second virtual memory region). The TMR virtual memory partition may be divided into a plurality of sub-partitions, for example, a primary 1 partition, a secondary 2 partition, and a secondary 3 partition. A corresponding management structure may be applied for in each sub-partition. For example, a management structure corresponding to the primary 1 partition includes a header (pre_s,size,fd,dk), a value (uTmr1 sum), and a memory block (primary mchunk1). Virtual memory partitioning is equivalent to specifying a memory address space range occupied by the target variable in a compilation process. When a memory block is applied for, it is applied for only within the memory space range. The regular memory variable can be applied for only within another address space range. There is no overlap in virtual addresses or physical addresses between the two pieces of address spaces.

Application: Apply for three independent memory blocks from three independent underlying memory pools to which the TMR virtual memory partition is mapped.

Allocation: Allocate the three independent memory blocks.

Because offsets between a primary memory block mchunk1, a secondary memory block mchunk2, and a secondary memory block mchunk3 are a known constant offset, only an address of the primary memory block mchunk1 needs to be recorded. Addresses of the other two independent memory blocks can be sequentially obtained by adding the known constant offset to the address. A read/write operation is performed on the memory blocks, data consistency of the three pieces of memory is compared, correct data is obtained through arbitration, and incorrect data is corrected.

Different from the embodiment corresponding to FIG. 12, in this embodiment, virtual memory partitioning is performed, and TMR virtual memory is separated from regular virtual memory. For compilation of read, write, and release interfaces, refer to the foregoing embodiments. Details are not described herein again.

A plurality of other embodiments may be summarized based on the description of the foregoing still another embodiment. In these embodiments, the target code obtained through compiler instrumentation includes calling a first API. The first API applies for the first virtual memory region and the second virtual memory region. The first virtual memory region is used to store a value of the target variable. The second virtual memory region is used to store a value of a memory variable other than the target variable. In address space occupied by the first virtual memory region, N pieces of memory are applied for. In the N pieces of memory, a base address of a t^{th} piece of memory has a constant offset relative to a base address of a (t - 1)^{th} piece of memory. 2 ≤ t ≤ N. In an embodiment, the first API may first apply for a third multi-modular redundancy management structure. The third multi-modular redundancy management structure includes the first virtual memory region and the second virtual memory region.

In the still another embodiment, TMR memory tracking is implemented through the constant offset, the conventional memory region and the TMR memory region are distinguished through virtual address separation to implement instrumentation only for TMR memory read/write operations, and service-insensitive TMR heap memory read/write is implemented through instrumentation for a multi-modular redundancy read/write function. The fat pointer is replaced with the constant offset to avoid pointer size multiplication, so that the work of the compiler is simple. In addition, the TMR memory region and the conventional memory region are distinguished through virtual address separation, so that instrumentation is required only for TMR memory read/write operations.

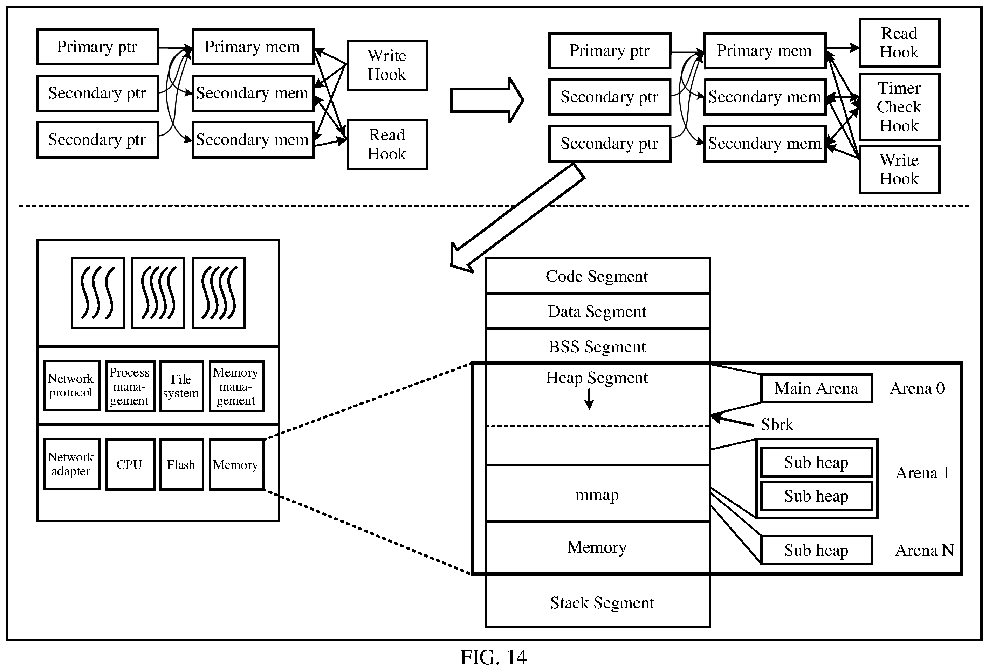

The following lists yet another embodiment. As shown in FIG. 14, in this embodiment, performance may be improved based on any one or a combination of the foregoing several embodiments. A read operation and/or a write operation that use/uses a target variable modified by a directive as an object is changed into OS patrol. In a scenario involving a large quantity of read/write operations, system performance can be greatly improved.

The following description is provided based on the foregoing embodiments. For each operation of multi-modular redundancy memory application, release, read, and write based on the directive, specific implementation steps are as follows:
S41: Identify a directive in a compilation object.

The directive may be identified in the manner described in any one of the foregoing embodiments. Details are not described herein again.

S42: Perform compiler instrumentation on the compilation object to obtain target code.

A memory application interface may be compiled through the method described in any one of the foregoing embodiments. For example, when a POSIX-compatible memory application API needs to be called in source code to apply for multi-modular redundancy memory, a multi-modular redundancy directive (for example, _xmr) may be added before a definition of a variable receiving the memory. The following is an example of the memory application interface for which the directive is added: _xmr char *p = malloc(size). Then, before a compiler compiles the code into an executable binary program, the following procedure is added for the memory application interface for which the multi-modular redundancy directive is added: Reserve memory space for a TMR management structure and apply for the TMR management structure; apply for three independent memory blocks from underlying memory pools; and allocate the three independent memory blocks.

In this embodiment, a read interface may be compiled through the following procedure:
The multi-modular redundancy directive is specified during memory application for *p. Therefore, before compiling the code into an executable binary program, the compiler converts an access form (for example, *p) of pointer read into the following procedure:
A TMR read patrol thread is started during operating system (Operating System, OS) startup.

The TMR read patrol thread triggers TMR memory patrol when a specified condition is met. The specified condition may be periodic triggering or triggering based on a preset frequency, such as triggering patrol once every hour or triggering patrol once every 10 minutes. In another embodiment, a switch may be set for patrol triggering, which is controlled through user interaction.

The TMR read patrol thread sequentially reads each piece of multi-modular redundancy memory, compares data consistency of each piece of memory, obtains correct data through arbitration, and corrects incorrect data.

A correct memory value in the plurality of pieces of memory is returned.

For compilation of a write interface, refer to the foregoing compiler instrumentation process of the read interface. For example, the following procedure may be used:
A TMR write patrol thread is started during OS startup.

The TMR write patrol thread triggers TMR memory patrol when a specified condition is met.

The TMR write patrol thread sequentially writes a value of the target variable into each piece of multi-modular redundancy memory, compares data consistency of each piece of memory, obtains correct data through arbitration, and corrects incorrect data.

For compiler instrumentation of a memory release interface in this embodiment, refer to any one of the foregoing embodiments. Details are not described herein again.

A plurality of other embodiments may be summarized based on the description of the foregoing yet another embodiment. In these embodiments, performing compiler instrumentation on the compilation object includes: changing a read interface and/or a write interface that use/uses the target variable as an object in the compilation object into code used to perform the following operations: starting a patrol thread; and triggering the patrol thread. The patrol thread is used to: write the value of the target variable into N pieces of memory, or read values in N pieces of memory corresponding to the target variable; and compare the values in the N pieces of memory, obtain a correct value based on an arbitration strategy, and return the correct value as the value of the target variable. The arbitration strategy may be that a value with a highest proportion is used as the correct value. For example, in five memory blocks, values of four memory blocks are consistent, and are all 11100101; and a value of the other memory block is 11100100. A proportion of 11100101 is 80%. In this case, 11100101 is arbitrated as the correct value, and 11100101 is written in to the other memory block for correction.

In conclusion, in the memory management method provided in embodiments of this application, a multi-modular redundancy directive (for example, _tmr) is added for memory blocks to be applied for, to indicate that the memory blocks are multi-modular memory blocks. A memory manager applies for a plurality of pieces of memory based on the directive and uniformly manages them. In addition, full or partial compiler instrumentation is performed based on performance, reliability, and a constraint of a specific scenario for read operations and/or write operations on the memory blocks for which the multi-modular redundancy directive is added. An instrumentation function compares consistency of the multi-modular memory blocks and provides an arbitration result.

In this way, based on the method, shotgun hardening changes to software code in a large-scale system is avoided, and a reliability hardening error is invisible to a service, to ensure coordinated and rapid iterative evolution of service code in a reliable scenario and an unreliable scenario, code quality, and proper maintenance costs of large-scale software.

In addition, through testing, the memory management method provided in embodiments of this application achieves positive technical effects in terms of reliability, robustness, real-time performance, and the like. Details are as follows:
Reliability (Reliable): A system can be normally used under heavy load, high concurrency, and long-term operation.

Robustness (Robust): In the case of exceptions such as single-event upset, fault tolerance can be implemented to ensure normal operation of the system.

Real-time performance (Real-time): Flexible and efficient memory allocation algorithms and policies are supported to accelerate memory allocation and read/write.

An embodiment of this application further provides a computer program product. The product includes a program. The program includes a directive. The directive is used to modify a target variable. The target variable is a memory variable for which multi-modular redundancy memory needs to be applied for. Target code corresponding to the program is at least used to apply for N pieces of memory corresponding to the target variable. The target code includes code obtained by performing compiler instrumentation on the program. N ≥ 2. N is an integer.

It should be noted that in some embodiments, compilation processes for different languages are different. The target code may be intermediate code or executable code (binary code). For example, after compiler instrumentation is performed on Java source code, the target code may be code in a .class or .dex format. After compiler instrumentation is performed on C/C++ source code, the target code may be code in an .i, .s, .exe, or .out format. In the target code, at least a code line corresponding to a memory application interface exists. The memory application interface herein is a memory application interface that uses a memory variable modified by a directive as an object.

An embodiment of this application further provides a computer program product. The program product includes a program. When the program is run by an electronic device, the electronic device is enabled to implement the method in any one of the foregoing embodiments. For example, the program product may be an application, or an upgrade package, a functional plug-in, or the like used to upgrade the application.

An embodiment of this application further provides an electronic device. The electronic device includes one or more processors, a storage, at least one application, and one or more computer programs. The one or more computer programs are stored in the storage. The one or more computer programs include instructions. When the instructions are executed by the electronic device, the electronic device is enabled to perform the method in any one of the foregoing embodiments.

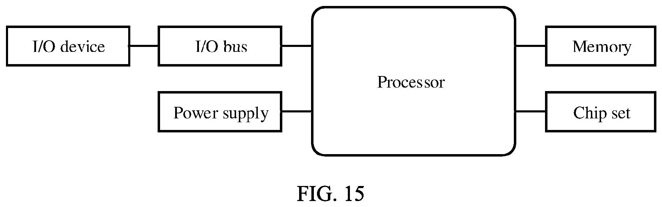

Specifically, the electronic device may be a server or a server cluster that provides an operator sequence optimization service. With reference to FIG. 15, a hardware structure of the electronic device may include a processor, a storage, and a chip set.

The processor is a core that processes all computing tasks and requests, and includes at least a CPU.

The storage includes a memory and a hard disk. A larger capacity enables simultaneous processing of more requests and files.

The chip set includes a northbridge chip and a southbridge chip, and is connected to various I/O devices. The northbridge chip is connected to the CPU, the memory, and a PCI bus. The southbridge chip is connected to I/O devices such as the hard disk and a network.

An I/O bus is connected to various I/O devices, such as network adapter USB. The higher the I/O bus bandwidth of a server, the more requests that can be processed. The I/O device includes network adapter USB and the like. A network adapter is a main device for connecting the server to an external network. A speed and performance of the network adapter directly affect a response speed and transmission speed of the server.

The power supply provides stable power for the server to ensure the normal operation of the server.

A chassis is a housing of server hardware, which protects the hardware from dust, vibration, and temperature.

For example, the processor may include one or more processing units. For example, the processor includes a neural network processor (neural-network processing unit, NPU), and may further include an application processor (application processor, AP), a modem processor, a graphics processing unit (graphics processing unit, GPU), an image signal processor (image signal processor, ISP), a controller, a digital signal processor (digital signal processor, DSP), a baseband processor, and the like. Different processing units may be independent components, or may be integrated into one or more processors. The controller may generate an operation control signal based on an instruction operation code and a time sequence signal, to complete control of instruction reading and instruction execution.

The storage may be configured to store computer-executable program code. The executable program code includes instructions. The internal memory may include a program storage region and a data storage region. The program storage region may store an operating system, an application needed by at least one function, and the like. The data storage region may store data (such as input data and output data) created in a process of using the electronic device, and the like. In addition, the internal memory may include a high-speed random access memory, and may further include a non-volatile memory, for example, at least one magnetic disk storage device, a flash storage device, or a universal flash storage (universal flash storage, UFS). The processor runs instructions stored in the internal memory and/or instructions stored in the storage disposed in the processor, to perform various function applications and data processing of the electronic device.

Alternatively, the electronic device may be a terminal device having specific computational power, for example, a mobile phone, a personal computer (personal computer, PC) (for example, a notebook computer), a tablet computer (Tablet Personal Computer, Tablet PC), or a wearable electronic device. The terminal device may include a processor, an interface for external memory, an internal memory, a universal serial bus (universal serial bus, USB) interface, a charging management module, a power management module, a battery, and the like.

It may be understood that the structure shown in this embodiment of the present invention is merely an example, and does not constitute a limitation on the electronic device. The electronic device in this embodiment of this application may include more or fewer components than those shown in the figure, some components may be combined, or some components may be split, or different component arrangements may be used. The components shown in the figure may be implemented by hardware, software, or a combination of software and hardware.

An embodiment of this application further provides a storage medium, including computer instructions. When the computer instructions are run on an electronic device, the electronic device is enabled to perform the method in any one of the foregoing embodiments.

An embodiment of this application further provides a chip system, including: a communication interface, configured to input and/or output data; and a processor, configured to execute a computer-executable program, to enable a device in which the chip system is installed to perform the method in any one of the foregoing embodiments.

It should be noted that the solution provided in embodiments of this application includes any one or more of a memory management method and apparatus, an electronic device, and a storage medium, or may be a software product, a hardware product, a virtual service product, or the like in another form obtained based on a technical concept of the method described in the specification of this application.

In the descriptions of the apparatus in embodiments of this application, various modules configured to implement method procedure functions are constructed in the apparatus. Division into the modules is merely logical function division. When embodiments of this application are implemented, functions of the modules may be implemented in one or more pieces of software and/or hardware.

Specifically, during actual implementation, all or some of the functional modules may be integrated into one physical entity, or may be physically separated. In addition, the modules may be all implemented in a form of software invoking processing elements; or the modules may be all implemented in a form of hardware; or some modules may be implemented in a form of software invoking processing elements, and some modules may be implemented in a form of hardware. For example, the detection module may be an independently disposed processing element, or may be integrated in one chip of an electronic device for implementation. Implementations of other modules are similar. In addition, all or some of the modules may be integrated, or may be implemented independently. In an implementation process, steps in the foregoing methods or the foregoing modules can be implemented by using a hardware integrated logic circuit in the processing element, or by using instructions in a form of software.

For example, the foregoing modules may be configured as one or more integrated circuits for implementing the foregoing method, for example, one or more application-specific integrated circuits (Application-Specific Integrated Circuit, ASIC), one or more digital signal processors (Digital Signal Processor, DSP), or one or more field programmable gate arrays (Field Programmable Gate Array, FPGA). For another example, these modules may be integrated together and implemented in a form of a system-on-a-chip (System-On-a-Chip, SOC).

Specifically, in an embodiment of this application, the one or more computer programs are stored in the storage, and the one or more computer programs include instructions. When the instructions are executed by the device, the device is enabled to perform the method steps in embodiments of this application.

Specifically, in an embodiment of this application, the processor of the electronic device may be a system-on-a-chip SoC. The processor may include a central processing unit (Central Processing Unit, CPU), and may further include another type of processor, for example, a graphics processing unit (graphics processing unit, GPU). Specifically, in an embodiment of this application, the processor of the electronic device may be a PWM control chip.

Specifically, in an embodiment of this application, the processor may include, for example, a CPU, a DSP, a microcontroller, or a digital signal processor, and may further include a GPU, an embedded neural-network processing unit (Neural-network Process Unit, NPU), and an image signal processor (Image Signal Processor, ISP). The processor may further include a necessary hardware accelerator or a logic processing hardware circuit, for example, an ASIC, or one or more integrated circuits configured to control program execution of the technical solutions in this application. In addition, the processors may have a function of operating one or more software programs, and the software programs may be stored in a storage medium.

Specifically, in an embodiment of this application, the storage of the electronic device may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any computer-readable medium that can be configured to carry or store expected program code in a form of instructions or a data structure and that can be accessed by a computer.

Specifically, in an embodiment of this application, the processor and the storage may be integrated into one processing apparatus, and more commonly, are components independent of each other. The processor is configured to execute program code stored in the memory to implement the method in embodiments of this application. In a specific implementation, the storage may alternatively be integrated into the processor, or independent of the processor.

Further, the device, apparatus, and module described in embodiments of this application may be specifically implemented by a computer chip or an entity, or may be implemented by a product having a specific function.

A person skilled in the art should understand that embodiments of this application may be provided as a method, an apparatus, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media that include computer-usable program code.

In several embodiments provided in this application, when any function is implemented in a form of software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes instructions for enabling a computer device (which may be a personal computer, a server, a network device, or the like) to perform all or some of the steps in the method described in embodiments of this application.

Embodiments of this application are described with reference to the flowcharts and/or block diagrams of the method, the device (apparatus), and the computer program product according to embodiments of this application. It should be understood that computer program instructions may be used to implement each process and/or each block in the flowchart and/or the block diagrams and a combination of a process and/or a block in the flowchart and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowchart and/or in one or more blocks in the block diagrams.

These computer program instructions may be stored in a computer-readable storage that can instruct the computer or any other programmable data processing device to work in a specific manner, so that the instructions stored in the computer-readable storage generate an artifact that includes an instruction apparatus. The instruction apparatus implements a specific function in one or more processes in the flowchart and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It should be noted that in embodiments of this application, the term "at least one" means one or more, the term "a plurality of" means two or more. "And/or" describes an association relationship for describing associated objects and represents that three relationships may exist. For example, A and/or B may represent the following three cases: Only A exists, both A and B exist, and only B exists. A and B may be singular or plural. The character "/" generally indicates an "or" relationship between the associated objects. "At least one of the following" and similar expressions refer to any combination of these terms, including any combination of single or plural terms. For example, at least one of a, b, or c may indicate a, b, c, a and b, a and c, b and c, or a, b, and c, where a, b, and c may be singular or plural.

In embodiments of this application, the term "include" or any other variant thereof is intended to cover a non-exclusive inclusion, so that a process, a method, a commodity, or a device that includes a series of elements not only includes those elements but also includes other elements that are not expressly listed, or further includes elements inherent to such a process, method, commodity, or device. An element preceded by "includes a ..." does not, without more constraints, preclude an existence of additional identical elements in the process, method, commodity, or device that includes the element.

This application can be described in the general context of executable computer instructions executed by a computer, for example, a program module. Generally, the program unit includes a routine, program, object, component, data structure, and the like for executing a particular task or implementing a particular abstract data type. This application may be practiced in distributed computing environments in which tasks are performed by remote processing devices that are connected through a communication network. In a distributed computing environment, program modules may be located in both local and remote computer storage media including storage devices.

Embodiments in this application are described in a progressive manner, the same and similar parts between various embodiments can be referred to each other, and each embodiment focuses on differences from other embodiments Especially, an apparatus embodiment is basically similar to a method embodiment, and therefore is described briefly; for related parts, refer to partial descriptions in the method embodiment.

A person of ordinary skill in the art may be aware that units and algorithm steps described in embodiments of this application may be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing apparatus and unit, reference may be made to a corresponding process in the foregoing method embodiments, and details are not described herein again.

The foregoing descriptions are merely specific implementations of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A memory management method, wherein the method comprises:
identifying that a directive exists in a compilation object, wherein the directive is used to modify a target variable, and the target variable is a memory variable for which multi-modular redundancy memory needs to be applied for; and
performing compiler instrumentation on the compilation object to obtain target code, wherein when being run, executable code corresponding to the target code is at least used to apply for N pieces of memory corresponding to the target variable, N ≥ 2, and N is an integer.

2. The method according to claim 1, wherein
performing compiler instrumentation on the compilation object comprises:
changing a memory application interface that uses the target variable as an object in the compilation object into calling a first API, wherein the first API is a multi-modular redundancy memory application function; and the multi-modular redundancy memory application function is at least used to apply for the N pieces of memory corresponding to the target variable.

3. The method according to claim 1 or 2, wherein
performing compiler instrumentation on the compilation object comprises:
changing a read interface that uses the target variable as an object in the compilation object into calling a second API, wherein the second API is a multi-modular redundancy memory read function; and the multi-modular redundancy memory read function is at least used to read values stored in the N pieces of memory.

4. The method according to any one of claims 1 to 3, wherein
performing compiler instrumentation on the compilation object comprises:
changing a write interface that uses the target variable as an object in the compilation object into calling a third API, wherein the third API is a multi-modular redundancy memory write function; and the multi-modular redundancy memory write function is at least used to write a value of the target variable into the N pieces of memory.

5. The method according to any one of claims 1 to 4, wherein
performing compiler instrumentation on the compilation object comprises:
changing a memory release interface that uses the target variable as an object in the compilation object into calling a fourth API, wherein the fourth API is a multi-modular redundancy memory release function; and the multi-modular redundancy memory release function is at least used to release the N pieces of memory.

6. The method according to claim 5, wherein
when being run, the executable code corresponding to the target code is further used to apply for a multi-modular redundancy memory management structure; and the multi-modular redundancy memory management structure is used to manage the N pieces of memory; and
the multi-modular redundancy memory release function is used to release the N pieces of memory and the multi-modular redundancy memory management structure.

7. The method according to any one of claims 1 to 6, wherein
identifying that the directive exists in the compilation object comprises:
identifying that the directive exists in a code line corresponding to the target variable in the compilation object.

8. The method according to any one of claims 1 to 7, wherein
the N pieces of memory comprise one primary memory block and (N - 1) secondary memory blocks; and
the target code comprises calling the first API; and the first API is used to perform the following operations:
applying for the multi-modular redundancy memory management structure, wherein the multi-modular redundancy management structure comprises an object header header; and the header is at least used to store base addresses of the (N - 1) secondary memory blocks;
applying for the N pieces of memory corresponding to the target variable, and returning base addresses respectively corresponding to the N pieces of memory;
defining a pointer used to access the target variable as a wide pointer; and
returning the wide pointer, wherein in the wide pointer, a most significant bit is used to store a first base address, and a least significant bit is used to store a first pointer; the first base address is a base address of the primary memory block; and the first pointer points to a memory address that is in the primary memory block and that is used to store the value of the target variable.

9. The method according to claim 8, wherein
the target code comprises calling the second API; and the second API is used to perform the following operations:
determining, based on the first base address and the first pointer, a second base address and a second pointer to an N^{th} pointer that correspond to the (N - 1) secondary memory blocks, wherein the second base address is a base address of the header; and the second pointer to the N^{th} pointer respectively point to memory addresses that are in the (N - 1) secondary memory blocks and that are used to store the value of the target variable; and
reading the values in the memory addresses to which the first pointer and the second pointer to the N^{th} pointer respectively point.

10. The method according to any one of claims 1 to 7, wherein
the target code comprises calling the first API; and the first API is used to perform the following operation:
applying for the N pieces of memory corresponding to the target variable, wherein a base address of a t^{th} piece of memory has a constant offset relative to a base address of a (t - 1)^{th} piece of memory; and 2 ≤ t ≤ N.

11. The method according to any one of claims 1 to 10, wherein
performing compiler instrumentation on the compilation object comprises:
changing the read interface and/or the write interface that use/uses the target variable as an object in the compilation object into code used to perform the following operations:
starting a patrol thread; and
triggering the patrol thread, wherein the patrol thread is used to:
write the value of the target variable into the N pieces of memory; or read the values in the N pieces of memory corresponding to the target variable; and
compare the values in the N pieces of memory, obtain a correct value based on an arbitration strategy, and return the correct value as the value of the target variable.

12. The method according to any one of claims 1 to 11, wherein
when the target variable is a static static variable or a global variable, performing compiler instrumentation on the compilation object to obtain the target code comprises:
linking a definition that uses the target variable as an object in the compilation object to a multi-modular data segment of a binary program, to obtain the executable code, wherein the executable code is used to apply for the N pieces of memory corresponding to the target variable when the executable code is loaded or an operating system is loaded.

13. A memory management apparatus, wherein the apparatus comprises:
a directive identification module, configured to identify that a directive exists in a compilation object, wherein the directive is used to modify a target variable, and the target variable is a memory variable for which multi-modular redundancy memory needs to be applied for; and
a compiler instrumentation module, configured to perform compiler instrumentation on the compilation object to obtain target code, wherein when being run, executable code corresponding to the target code is at least used to apply for N pieces of memory corresponding to the target variable, N ≥ 2, and N is an integer.

14. The apparatus according to claim 13, wherein
the compiler instrumentation module is specifically configured to change a memory application interface that uses the target variable as an object in the compilation object into calling a first API, wherein the first API is a multi-modular redundancy memory application function; and the multi-modular redundancy memory application function is at least used to apply for the N pieces of memory corresponding to the target variable.

15. The apparatus according to claim 13 or 14, wherein
the compiler instrumentation module is specifically configured to change a read interface that uses the target variable as an object in the compilation object into calling a second API, wherein the second API is a multi-modular redundancy memory read function; and the multi-modular redundancy memory read function is at least used to read values stored in the N pieces of memory.

16. The apparatus according to any one of claims 13 to 15, wherein
the compiler instrumentation module is specifically configured to change a write interface that uses the target variable as an object in the compilation object into calling a third API, wherein the third API is a multi-modular redundancy memory write function; and the multi-modular redundancy memory write function is at least used to write a value of the target variable into the N pieces of memory.

17. The apparatus according to any one of claims 13 to 16, wherein
the compiler instrumentation module is specifically configured to change a memory release interface that uses the target variable as an object in the compilation object into calling a fourth API, wherein the fourth API is a multi-modular redundancy memory release function; and the multi-modular redundancy memory release function is at least used to release the N pieces of memory.

18. The apparatus according to any one of claims 13 to 17, wherein
the N pieces of memory comprise one primary memory block and (N - 1) secondary memory blocks; and
the target code comprises calling the first API; and the first API is used to perform the following operations:
applying for the multi-modular redundancy memory management structure, wherein the multi-modular redundancy management structure comprises an object header header; and the header is at least used to store base addresses of the (N - 1) secondary memory blocks;
applying for the N pieces of memory corresponding to the target variable, and returning base addresses respectively corresponding to the N pieces of memory;
defining a pointer used to access the target variable as a wide pointer; and
returning the wide pointer, wherein in the wide pointer, a most significant bit is used to store a first base address, and a least significant bit is used to store a first pointer; the first base address is a base address of the primary memory block; and the first pointer points to a memory address that is in the primary memory block and that is used to store the value of the target variable.

19. The apparatus according to claim 18, wherein
the target code comprises calling the second API; and the second API is used to perform the following operations:
determining, based on the first base address and the first pointer, a second base address and a second pointer to an N^{th} pointer that correspond to the (N - 1) secondary memory blocks, wherein the second base address is a base address of the header; and the second pointer to the N^{th} pointer respectively point to memory addresses that are in the (N - 1) secondary memory blocks and that are used to store the value of the target variable; and
reading the values in the memory addresses to which the first pointer and the second pointer to the N^{th} pointer respectively point.

20. The apparatus according to any one of claims 13 to 17, wherein
the target code comprises calling the first API; and the first API is used to perform the following operation:
applying for the N pieces of memory corresponding to the target variable, wherein a base address of a t^{th} piece of memory has a constant offset relative to a base address of a (t - 1)^{th} piece of memory; and 2 ≤ t ≤ N.

21. The apparatus according to any one of claims 13 to 20, wherein
performing compiler instrumentation on the compilation object comprises:
changing the read interface and/or the write interface that use/uses the target variable as an object in the compilation object into code used to perform the following operations:
starting a patrol thread; and
triggering the patrol thread, wherein the patrol thread is used to:
write the value of the target variable into the N pieces of memory; or read the values in the N pieces of memory corresponding to the target variable; and
compare the values in the N pieces of memory, obtain a correct value based on an arbitration strategy, and return the correct value as the value of the target variable.

22. The apparatus according to any one of claims 13 to 21, wherein
when the target variable is a static static variable or a global variable, performing compiler instrumentation on the compilation object to obtain the target code comprises:
linking a definition that uses the target variable as an object in the compilation object to a multi-modular data segment of a binary program, to obtain the executable code, wherein the executable code is used to apply for the N pieces of memory corresponding to the target variable when the executable code is loaded or an operating system is loaded.

23. An electronic device, wherein the electronic device comprises:
one or more processors, a storage, at least one application, and one or more computer programs, wherein the one or more computer programs are stored in the storage, the one or more computer programs comprise instructions, and when the instructions are executed by the electronic device, the electronic device is enabled to perform the method according to any one of claims 1 to 12.

24. A storage medium, comprising computer instructions, wherein when the computer instructions are run on an electronic device, the electronic device is enabled to perform the method according to any one of claims 1 to 12.
